(19)

**Europäisches Patentamt**
**European Patent Office**
**Office européen des brevets**

(11) **EP 2 747 264 A2**

(12) **EUROPEAN PATENT APPLICATION**

(43) Date of publication:
**25.06.2014 Bulletin 2014/26**

(51) Int Cl.:
**H02M 7/00** (2006.01)

(21) Application number: **13198254.8**

(22) Date of filing: **19.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.12.2012 JP 2012280276**

(71) Applicant: **Kabushiki Kaisha Yaskawa Denki Kitakyushu-shi, Fukuoka 806-0004 (JP)**

(72) Inventors:
• **Hara, Hidenori**
  **Kitakyushu-shi, Fukuoka 806-0004 (JP)**

• **Inomata, Kentaro**
  **Kitakyushu-shi, Fukuoka 806-0004 (JP)**
• **Yamanaka, Katsutoshi**
  **Kitakyushu-shi, Fukuoka 806-0004 (JP)**
• **Morimoto, Shinya**
  **Kitakyushu-shi, Fukuoka 806-0004 (JP)**
• **Takeda, Kotaro**
  **Kitakyushu-shi, Fukuoka 806-0004 (JP)**

(74) Representative: **Grünecker, Kinkeldey, Stockmair & Schwanhäusser Leopoldstrasse 4 80802 München (DE)**

(54) **Matrix converter and method for controlling matrix converter**

(57)    A matrix converter (1) according to one aspect of an embodiment includes a plurality of bidirectional switches (Sw1 to Sw9) and a controlled (15). The bidirectional switches (Sw1 to Sw9) connect each phase of an alternating current (AC) power supply (2) with each phase of the rotary electric machine (3). The controller (15) performs power conversion control between the AC power supply (2) and the rotary electric machine (3) by controlling a plurality of unidirectional switching elements (31, 32) constituting the bidirectional switches (Sw1 to Sw9) individually. The controller (15) performs switching control for advancing the timing at which the unidirectional switching elements (31, 32) constituting the bidirectional switches (Sw1 to Sw9) are switched ON from that in 120-degree conduction control, and for extending a period for which the unidirectional switching elements are kept ON from that in the 120-degree conduction control.

FIG.1

EP 2 747 264 A2

**Description**

FIELD

The embodiments discussed herein are directed to a matrix converter and a method for controlling the matrix converter.

BACKGROUND

Attention is being focused on matrix converters as a new power converter, because of being capable of suppressing a harmonic current and making effective use of regenerative power. Some matrix converters include a plurality of bidirectional switches that connect each of the phases of an alternating current (AC) power supply with each of the phases of a rotary electric machine and control these bidirectional switches to perform power conversion.

In such matrix converters, a technology is known that stops power conversion operation when the AC power supply becomes low voltage for some reasons. For example, Japanese Patent Application Laid-open No. 2005-287200 discloses a technology that stops power supply to a motor when the AC power supply becomes low level while the motor is driven with the voltage of each phase of the AC power supply controlled by bidirectional switches.

However, in a matrix converter having a rotary electric machine as a load, it is desired that power conversion operation is continued without being stopped even when the AC power supply becomes low voltage.

One aspect of embodiments has been achieved in view of the above circumstances, and an object thereof is to provide a matrix converter and a method for controlling the matrix converter that can continue power conversion operation even when an AC power supply becomes low voltage.

SUMMARY

A matrix converter according to one aspect of an embodiment includes a plurality of bidirectional switches and a controller. The bidirectional switches connect each phase of an alternating current (AC) power supply with each phase of the rotary electric machine. The controller performs power conversion control between the AC power supply and the rotary electric machine by controlling a plurality of unidirectional switching elements constituting the bidirectional switches individually. The controller performs switching control for advancing the timing at which the unidirectional switching elements constituting the bidirectional switches are switched ON from that in 120-degree conduction control, and for extending a period for which the unidirectional switching elements are kept ON from that in the 120-degree conduction control.

One aspect of embodiments can provide a matrix converter and a method for controlling the matrix converter that can continue power conversion operation even when an AC power supply becomes low voltage.

BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1 is a diagram illustrating a configuration example of a matrix converter according to an embodiment;
FIG. 2 is a diagram illustrating a configuration example of bidirectional switches illustrated in FIG. 1;
FIG. 3 is a diagram illustrating an example of the specific configuration of a second drive controller illustrated in FIG. 1;
FIG. 4 is a diagram illustrating an example of the relation between a system reactive current command and a system voltage value;
FIG. 5 is a diagram illustrating a current type inverter model;
FIG. 6 is a diagram illustrating a relation between a system phase and switch control signals of a converter;
FIG. 7 is a diagram illustrating an example of the specific configuration of an AC generator pulse pattern generating unit according to the embodiment;
FIG. 8 is a diagram illustrating the relation between intermediate signals and a generator phase according to the embodiment;
FIG. 9 is a diagram illustrating an example of the operation of the AC generator pulse pattern generating unit according to the embodiment;
FIG. 10 is a diagram illustrating pulse patterns of switch drive signals generated by the AC generator pulse pattern generating unit according to the embodiment;
FIG. 11 is a diagram illustrating a configuration example of a power conversion unit illustrated in FIG. 1;

FIG. 12 is a diagram illustrating the configuration of a second drive controller according to a first modification;

FIG. 13 is a diagram illustrating the configuration of an AC generator pulse pattern generating unit according to the first modification;

FIG. 14 is a diagram illustrating an example of the operation of the AC generator pulse pattern generating unit according to the first modification;

FIG. 15 is a diagram illustrating pulse patterns of switch drive signals generated by the AC generator pulse pattern generating unit according to the first modification;

FIG. 16 is a diagram illustrating the configuration of an AC generator pulse pattern generating unit according to a second modification;

FIG. 17 is a diagram illustrating a pulse pattern table according to the second modification;

FIG. 18 is a diagram illustrating pulse patterns of switch drive signals generated by the AC generator pulse pattern generating unit according to the second modification;

FIG. 19 is a diagram illustrating a configuration example of a serial multiplex matrix converter according to another embodiment;

FIG. 20 is a diagram illustrating an example of the specific configuration of power conversion cells illustrated in FIG. 19;

FIG. 21 is a diagram illustrating the configuration of a system pulse pattern generator, a GeGr switch drive signal generator, and a GrGe switch drive signal generator in the serial multiplex matrix converter, and

FIG. 22 is a flowchart illustrating a process that is executed by a controller according to the embodiments.

DESCRIPTION OF EMBODIMENTS

The following describes embodiments of a matrix converter and a method for controlling the matrix converter disclosed by the present application in detail with reference to the attached drawings. The embodiments disclosed below do not limit the present invention.

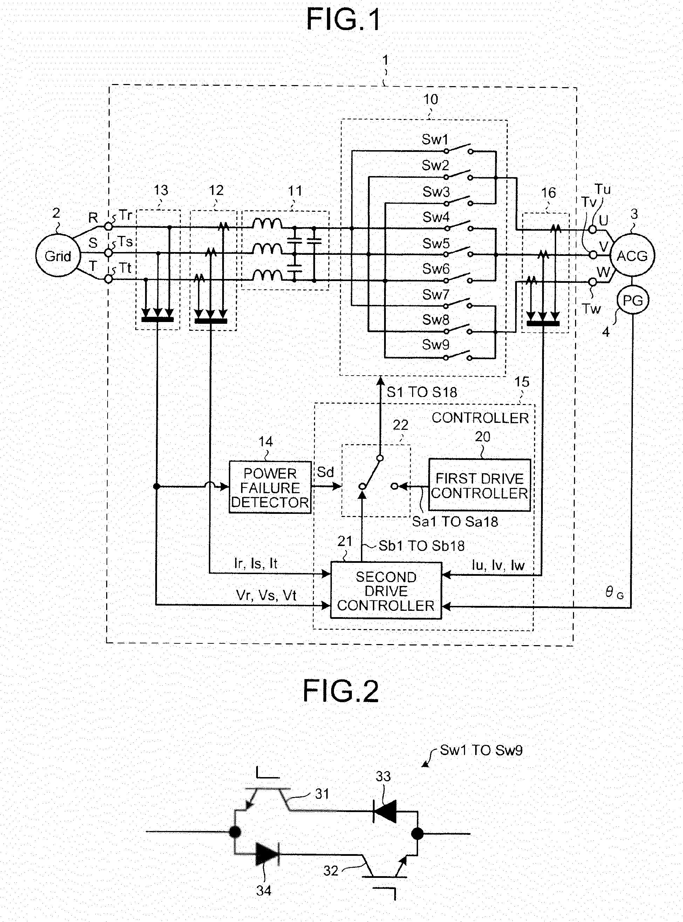

FIG. 1 is a diagram illustrating a configuration example of a matrix converter according to an embodiment. The embodiments below describe as an example a matrix converter that converts generated power of a rotary electric machine, that is, an AC generator (ACG), and supplies it to an AC power supply. However, the rotary electric machine is not limited to the AC generator and may be, for example, an AC motor. The AC power supply, which is described with a power system (grid) as an example, is not limited thereto.

As illustrated in FIG. 1, this matrix converter 1 according to the embodiment is provided in between a three-phase AC power system 2 and a rotary electric machine 3 and performs power conversion between the power system 2 and the rotary electric machine 3. Described below is an example in which a synchronous generator is used as an example of the rotary electric machine 3.

A position detector 4 that detects the rotational position of the rotary electric machine 3 is proved on a rotor shaft of the rotary electric machine 3. The rotational position $\theta_G$ of the rotary electric machine 3 detected by the position detector 4 is input to the matrix converter 1.

The matrix converter 1 includes a power conversion unit 10, an LC filter 11, current detectors 12 and 16, a voltage detector 13, a power failure detector 14, and a controller 15. The matrix converter 1 also includes system side terminals Tr, Ts, and Tt, and generator side terminals Tu, Tv, and Tw. The power system 2 is connected to the system side terminals Tr, Ts, and Tt, whereas the rotary electric machine 3 is connected to the generator side terminals Tu, Tv, and Tw.

The power conversion unit 10 includes a plurality of bidirectional switches Sw1 to Sw9 that connect the respective R phase, S phase, and T phase of the power system 2 with the U phase, the V phase, and the W phase of the rotary electric machine 3. The bidirectional switches Sw1 to Sw3 are bidirectional switches that respectively connect the R phase, S phase, and T phase of the power system 2 with the U phase of the rotary electric machine 3. The bidirectional switches Sw4 to Sw6 are bidirectional switches that respectively connect the R phase, S phase, and T phase of the power system 2 with the V phase of the rotary electric machine 3. The bidirectional switches Sw7 to Sw9 are bidirectional switches that respectively connect the R phase, S phase, and T phase of the power system 2 with the W phase of the rotary electric machine 3.

The bidirectional switches Sw1 to Sw9 has a configuration illustrated in FIG. 2, for example. FIG. 2 is a diagram illustrating a configuration example of the bidirectional switches Sw1 to Sw9. As illustrated in FIG. 2, each of the bidirectional switches Sw1 to Sw9 is configured by connecting in parallel a serial connected body including a unidirectional switching element 31 and a diode 33 and a serial connected body including a unidirectional switching element 32 and a diode 34.

For the unidirectional switching elements 31 and 32, for example, semiconductor devices such as an insulated gate bipolar transistor (IGBT) are used. By individually turning on/off the unidirectional switching elements 31 and 32 constituting the bidirectional switches Sw1 to Sw9, the conduction direction can be controlled.

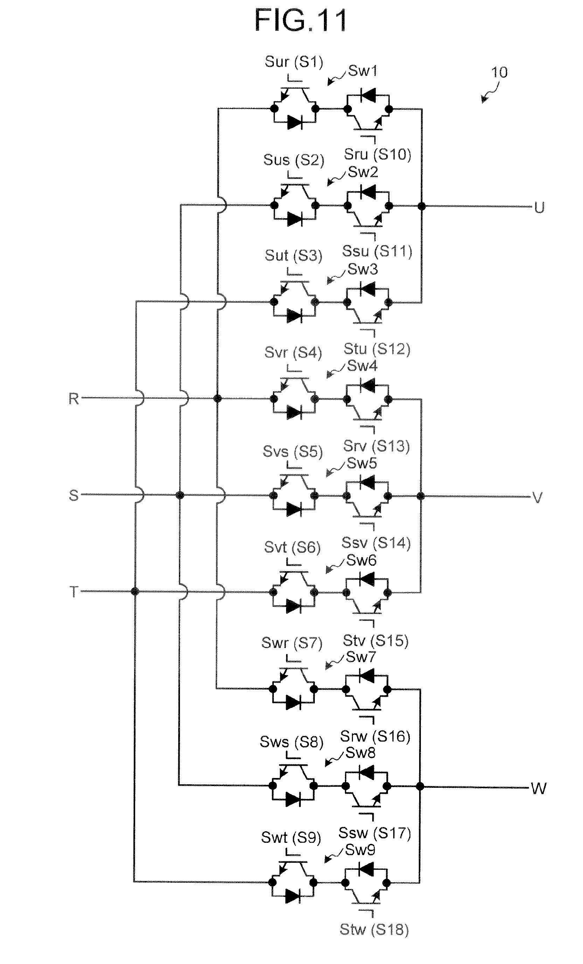

The configuration of each of the bidirectional switches Sw1 to Sw9 is not limited to the configuration illustrated in FIG. 2. For example, each of the bidirectional switches Sw1 to Sw9 may have a configuration that includes reverse blocking switching elements serving as the unidirectional switching elements 31 and 32, and in which these switching elements are connected to each other in parallel in mutually opposite directions. Each of the bidirectional switches Sw1 to Sw9 may also have the configuration illustrated in FIG. 11, which will be described below.

The LC filter 11 is provided between the power conversion unit 10 and the R, S, and T phases of the power system 2 to suppress the influence of noise from the power conversion unit 10 to the power system 2. Specifically, the LC filter 11 includes three reactors and three capacitors, and removes high-frequency-component noise (pulse-width modulation (PWM) component noise) resulting from the switching of the bidirectional switches Sw1 to Sw9 included in the power conversion unit 10. In this manner, the LC filter 11 is enabled to suppress outputs of high-frequency-component noise produced in the power conversion unit 10 to the power system 2. The configuration of the LC filter 11 is not limited to the configuration illustrated in FIG. 1, and may not be provided with reactors, for example.

First ends of the three reactors are connected to the R phase, the S phase, and the T phase of the power system 2, respectively, and second ends of the three reactors are connected to the power conversion unit 10. The three capacitors are connected to the second ends of two different reactors.

The current detector 12 is provided in between the power system 2 and the LC filter 11 to detect the current values Ir, Is, and It of currents passing between the respective R phase, S phase, and T phase of the power system 2 and the LC filter 11 (hereinafter, referred to as "system phase current values Ir, Is, and It").

The current detector 16 is provided between the rotary electric machine 3 and the power conversion unit 10, and detects current values Iu, Iv, and Iw respectively of currents flowing between the U phase, the V phase, and the W phase of the rotary electric machine 3 and the power conversion unit 10 (hereinafter, referred to as "generator current values Iu, Iv, and Iw"). Each of the current detectors 12 and 16 is a current sensor that detects a current using a hall element that is a magnetoelectric transducer, for example.

The voltage detector 13 is provided between the power system 2 and the LC filter 11, and detects instantaneous voltage values Vr, Vs, and Vt of the R phase, the S phase, the T phase of the power system 2, respectively (hereinafter, referred to as "system phase voltage values Vr, Vs, and Vt").

The power failure detector 14 detects if an active voltage value Va of the system voltage (hereinafter, referred to as a system voltage value Va) is equal to or lower than a voltage value V1. If the system voltage value Va is equal to or lower than the voltage value V1, the power failure detector 14 determines that a failure of the power system 2 has occurred, and outputs a failure detection signal Sd at a high level. If the system voltage value Va is higher than the voltage value V1, the power failure detector 14 determines that no failure of the power system 2 has occurred, and outputs the failure detection signal Sd at a low level.

The power failure detector 14 converts the system phase voltage values Vr, Vs, and Vt into $\alpha\beta$ components of two orthogonal axes on fixed coordinates to determine an $\alpha$-axial system voltage value $V_\alpha$ and a $\beta$-axial system voltage value $V_\beta$. The power failure detector 14 then calculates the root sum square of the system voltage values $V_\alpha$ and $V_\beta$ $(=\sqrt{(V_\alpha^2+V_\beta^2)})$ and sets the calculation result to be the system voltage value Va.

The controller 15 includes a first drive controller 20, a second drive controller 21, and a switching unit 22. The first drive controller 20 generates a voltage command based on a torque command that instructs a torque amount the rotary electric machine 3 generates, generates switch drive signals S1 to S18 for outputting to the rotary electric machine 3 a voltage according to the voltage command by a known PWM control method for matrix converters, and outputs the signals to the power conversion unit 10.

The voltage command is generated by a known vector control rule for synchronous generators based on the torque command. The power conversion unit 10 collectively turns on the unidirectional switching elements 31 and 32 constituting the respective bidirectional switches Sw1 to Sw9 with the switch drive signals S1 to S18 and outputs the voltage according to the voltage command by PWM control to perform power conversion in which the magnitude of a passing current and a conduction direction are determined based on the relation between output voltage and generated voltage.

The second drive controller 21 controls power conversion by switching some of the unidirectional switching elements 31 and 32 constituting each of the bidirectional switches Sw1 to Sw9 ON based on the system phase voltage values Vr, Vs, and Vt, the system phase current values Ir, Is, and It, and the generator current values Iu, Iv, and Iw.

By turning on part of the unidirectional switching elements 31 and 32 constituting the respective bidirectional switches Sw1 to Sw9, the conduction direction can be controlled. This can prevent a large current from continuing to pass between the rotary electric machine 3 and the power system 2 to perform power conversion operation while performing current control even in such a case as a power failure in which the voltage of the power system 2 is extremely lower than the voltage of the rotary electric machine 3.

For example, the second drive controller 21 keeps a unidirectional switching element that passes a current between any two phases of the power system 2 side among the unidirectional switching elements 31 and 32 constituting the bidirectional switches Sw1 to Sw9 ON. The second drive controller 21 keeps a unidirectional switching element that passes a current between any two phases of the rotary electric machine 3 side among the unidirectional switching elements 31 and 32 constituting the bidirectional switches Sw1 to Sw9 ON. This control can continue to pass a current between any two phases of the power system 2 and between any two phases of the rotary electric machine 3.

The switching unit 22 selects the switch drive signals S1 to S18 to be output to the power conversion unit 10 and outputs the signals based on the power failure detection signal Sd output from the power failure detector 14. Specifically, if the power failure detection signal Sd output from the power failure detector 14 is at the low level, the switching unit 22 outputs switch drive signals Sa1 to Sa18 generated by the first drive controller 20 as the switch drive signals S1 to S18.

If the power failure detection signal Sd output from the power failure detector 14 is at the high level, the switching unit 22 outputs switch drive signals Sb1 to Sb18 generated by the second drive controller 21 as the switch drive signals S1 to S18.

Accordingly, when the power system 2 becomes low voltage, power conversion control is performed that turns on part of the unidirectional switching elements 31 and 32 constituting the respective bidirectional switches Sw1 to Sw9 with the switch drive signals Sb1 to Sb18 generated by the second drive controller 21. This can continue the power conversion operation even when the power system 2 becomes low voltage.

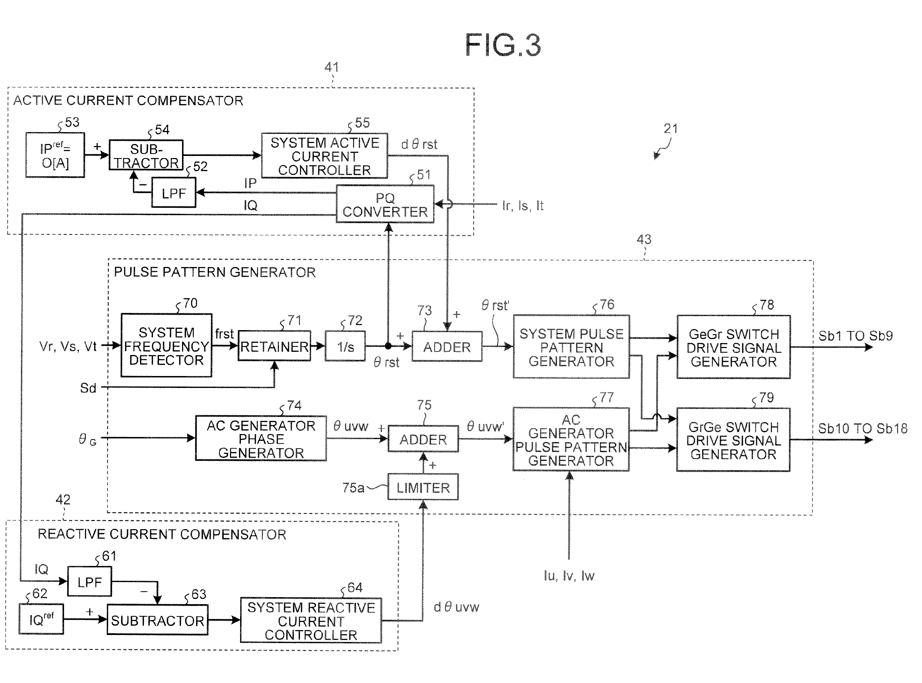

An example of the specific configuration of the second drive controller 21 will now be explained in detail. FIG. 3 is a diagram illustrating an example of the specific configuration of the second drive controller 21. As illustrated in FIG. 3, the second drive controller 21 includes an active current compensator 41, a reactive current compensator 42, and a pulse pattern generator 43.

Described first is the active current compensator 41. The active current compensator 41 includes a PQ converter 51, a low-pass filter (LPF) 52, a system active current command unit 53, a subtractor 54, and a system active current controller 55. The active current compensator 41 generates a system phase compensation value dθrst so that the system active current value coincides with a system active current command IPref and outputs the generated system phase compensation value dθrst to the pulse pattern generator 43.

The PQ converter 51 converts the system phase current values Ir, Is, and It into αβ components of two orthogonal axes on fixed coordinates to determine an α-axial system current value $I_\alpha$ and a β-axial system current value $I_\beta$. The PQ converter 51 converts the αβ axial components into components on a rotating coordinate system that rotates according to the voltage phase θrst of the power system 2 (hereinafter, referred to as a "system phase θrst"), thereby determining a system active current IP and a system reactive current IQ.

The PQ converter 51 determines the system active current IP and the system reactive current IQ by, for example, performing the calculation of Formula (1) below.

[Expression 1]

$$\begin{pmatrix} IP \\ IQ \end{pmatrix} = \begin{pmatrix} \cos\theta rst & -\sin\theta rst \\ \sin\theta rst & \cos\theta rst \end{pmatrix} \begin{pmatrix} 1 & -1/2 & -1/2 \\ 0 & \sqrt{3/2} & -\sqrt{3/2} \end{pmatrix} \begin{pmatrix} Ir \\ Is \\ It \end{pmatrix} \dots (1)$$

The LPF 52 removes high-frequency-component noise from the system active current IP, and outputs the resultant current to the subtractor 54.

The subtractor 54 calculates a system active current variation as a variation between the system active current command IPref and the system active current IP by subtracting the output of the LPF 52 from the system active current command IPref output from the system active current command unit 53 and outputs the system active current variation to the system active current controller 55.

The system active current controller 55 is, for example, configured from a PI (proportional integration) controller and generates the system phase compensation value dθrst by performing a proportional integral operation so that the system active current variation becomes zero. In this case, the system active current command IPref is set to be zero, and the system active current controller 55 generates the system phase compensation value dθrst so that the system active current IP becomes zero.

Described next is the reactive current compensator 42. The reactive current compensator 42 includes a low-pass filter (LPF) 61, a system reactive current command unit 62, a subtractor 63, and a system reactive current controller 64. The reactive current compensator 42 generates a generator phase correction value dθuvw so that a system reactive current value coincides with a system reactive current command IQref and outputs the generated generator phase correction value dθuvw to the pulse pattern generator 43.

The subtractor 63 calculates a system reactive current variation as a variation between the system reactive current command IQref and the system reactive current IQ by subtracting the output of the LPF 61 from the system reactive current command IQref output from the system reactive current command unit 62 and outputs the system reactive current variation to the system reactive current controller 64.

The system reactive current controller 64 is, for example, configured from a PI controller and generates the generator phase correction value dθuvw by performing a proportional integral operation so that the system reactive current variation becomes zero. The system reactive current command IQref can be, for example, a value according to the system voltage value Va.

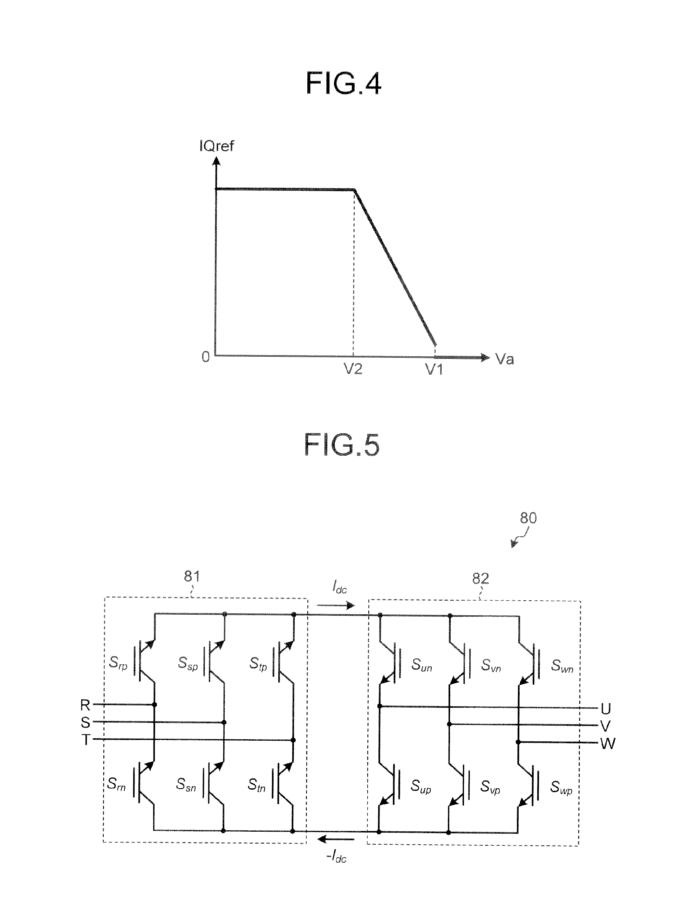

FIG. 4 is a diagram illustrating an example of the relation between the system reactive current command IQref and the system voltage value Va. As illustrated in FIG. 4, the system reactive current command unit 62 generates a system reactive current command IQref that decreases linearly as the system voltage value Va increases in a region where the system voltage value Va exceeds a voltage value V2 serving as a second threshold, while the system voltage value Va is equal to or lower than the voltage value V1 serving as a first threshold.

The system reactive current command unit 62 generates the system reactive current command IQref that is maximized when the system voltage value Va is a voltage value of V2 as the second threshold and that becomes zero in an area in which the system voltage value Va exceeds a voltage value of V1 as the first threshold. The relation between the system reactive current command IQref and the system voltage value Va may be, without limited to the example illustrated in FIG. 4, a different relation.

The pulse pattern generator 43 illustrated in FIG. 3 will now be explained. The pulse pattern generator 43 generates switch drive signals S1 to S18 for driving the bidirectional switches Sw1 to Sw9 based on the system phase voltage values Vr, Vs, and Vt, the rotational position $\theta_G$, the system phase compensating value dθrst, the generator phase correction value dθuvw, the failure detection signal Sd, and the generator current values Iu, Iv, and Iw.

The pulse pattern generator 43 includes a system frequency detector 70, a retainer 71, an integrator 72, an adder 73, an AC generator phase generator 74, an adder 75, and a limiter 75a. The pulse pattern generator 43 also includes a system pulse pattern generator 76, an AC generator pulse pattern generator 77, a GeGr switch drive signal generator 78, and a GrGe switch drive signal generator 79.

The system frequency detector 70 is, for example, a phase locked loop (PLL) and outputs a system frequency frst that is in sync with the voltage frequency of the power system 2 based on the system phase voltage values Vr, Vs, and Vt.

The retainer 71 retains the system frequency frst output from the system frequency detector 70 at the timing when the power failure detection signal Sd changes from the low level to the high level and releases the retention of the system frequency frst at the timing when the power failure detection signal Sd changes from the high level to the low level.

The integrator 72 integrates the system frequency frst output from the retainer 71, generates the system phase θrst, and outputs the θrst to the active current compensator 41 and the adder 73. The adder 73 adds the system phase compensation value dθrst to the system phase θrst to generate a system corrected phase θrst' and outputs the generated system corrected phase θrst' to the system pulse pattern generator 76.

The AC generator phase generator 74 generates a generator phase θuvw by calculating a product of the rotational position $\theta_G$ and the number of pole pairs in the rotary electric machine 3, and outputs the generator phase θuvw to the adder 75. The limiter 75a limits the generator phase correction value dθuvw received from the reactive current compensator 42 to a value less than 30 degrees, and outputs the result to the adder 75. The adder 75 generates a corrected generator phase θuvw' by adding the generator phase correction value dθuvw to the generator phase θuvw, and outputs the corrected generator phase θuvw' thus generated to the AC generator pulse pattern generator 77.

The pulse pattern generator 43 generates the switch drive signals S1 to S18 using a current type inverter model illustrated in FIG. 5. FIG. 5 is a diagram illustrating a current type inverter model.

This current type inverter model 80 illustrated in FIG. 5 is a model including a converter 81 and an inverter 82. The converter 81 is configured by a plurality of switching elements that are full-bridge connected to the R phase, S phase, and T phase of the power system 2. The respective switching elements of the converter 81 are driven by switch drive signals Srp, Ssp, Stp, Srn, Ssn, and Stn (hereinafter, referred to as "switch drive signals Srp to Stn").

The inverter 82 is configured by a plurality of switching elements that are full-bridge connected to the U phase, the V phase, and the W phase of the rotary electric machine 3. The respective switching elements of the inverter 82 are driven by switch drive signals Sup, Svp, Swp, Sun, Svn, and Swn (hereinafter, referred to as "switch drive signals Sup to Swn").

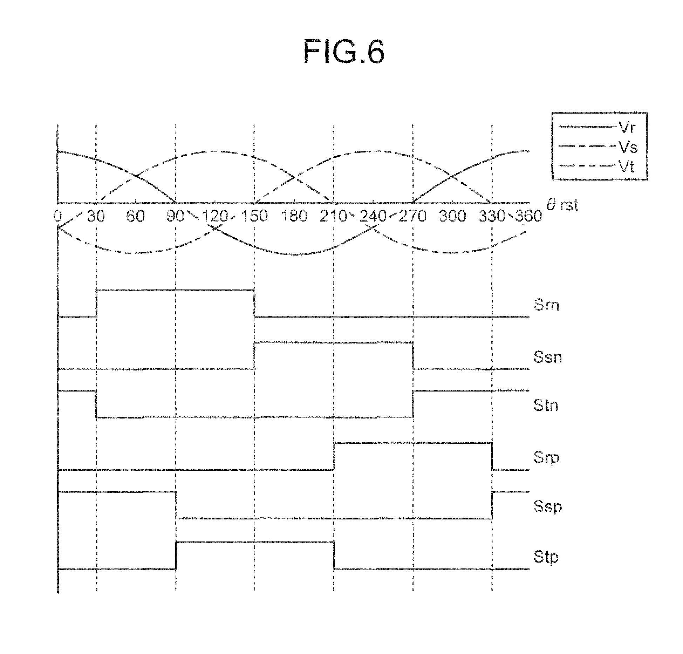

The system pulse pattern generator 76 has patterns of the switch drive signals Srp to Stn of the converter 81 that passes a current of 120-degree conduction control with respect to the system phase θrst and generates the switch drive signals Srp to Stn according to the system corrected phase θrst'. FIG. 6 is a diagram illustrating a relation between the system phase θrst and the switch drive signals Srp to Stn and represents a relation between the two for passing a current of 120-degree conduction control advanced by 90 degrees with respect to the system phase θrst.

The system corrected phase θrst' is generated through the addition of the system phase compensation value dθrst determined so that the system active current IP becomes zero to the system phase θrst. In view of this, the system pulse pattern generator 76 generates the switch drive signals Srp to Stn as illustrated in FIG. 6 based on the system corrected phase θrst', thereby passing a reactive current that is advanced by 90 degrees and whose system active current IP is zero to the power system 2 side.

The system pulse pattern generator 76 generates the switch drive signals Srp to Stn so that a switching element that passes a current between any two phases of the power system 2 side is kept ON. For example, when being in a range of 0°≤θrst<30° and 330°≤θrst<360°, the switch drive signals Stn, Ssp are at the high level, and the others are at the low level. This causes a current to pass between the T phase and the S phase.

Similarly, when being in a range of 30°≤θrst<90°, the switch drive signals Srn, Ssp are at the high level, which causes a current to pass between the R phase and the S phase. When being in a range of 90°≤θrst<150°, the switch drive signals Srn, Stp are at the high level, which causes a current to pass between the R phase and the T phase. When being in a range of 150°≤θrst<210°, the switch drive signals Ssn, Stp are at the high level, which causes a current to pass between the S phase and the T phase.

When being in a range of 210°≤θrst<270°, the switch drive signals Ssn, Srp are at the high level, which causes a current to pass between the S phase and the R phase. When being in a range of 270°≤θrst<330°, the switch drive signals Stn, Srp are at the high level, which causes a current to pass between the T phase and the R phase. Thus, the system pulse pattern generator 76 generates the pulse patterns so that a current whose phase is advanced by 90 degrees with respect to the system phase θrst passes.

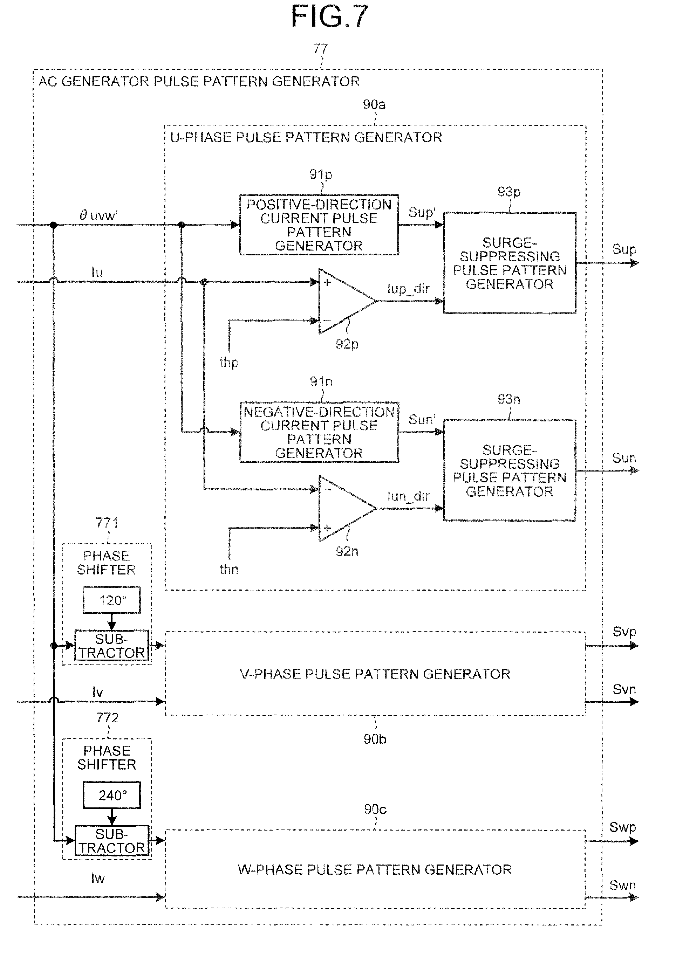

The AC generator pulse pattern generator 77 generates the switch drive signals Sup to Swn correspondingly to the corrected generator phase θuvw' and the generator current values Iu, Iv, and Iw. An example of the configuration and the operation of the AC generator pulse pattern generator 77 will now be explained with reference to FIGS. 7 to 10.

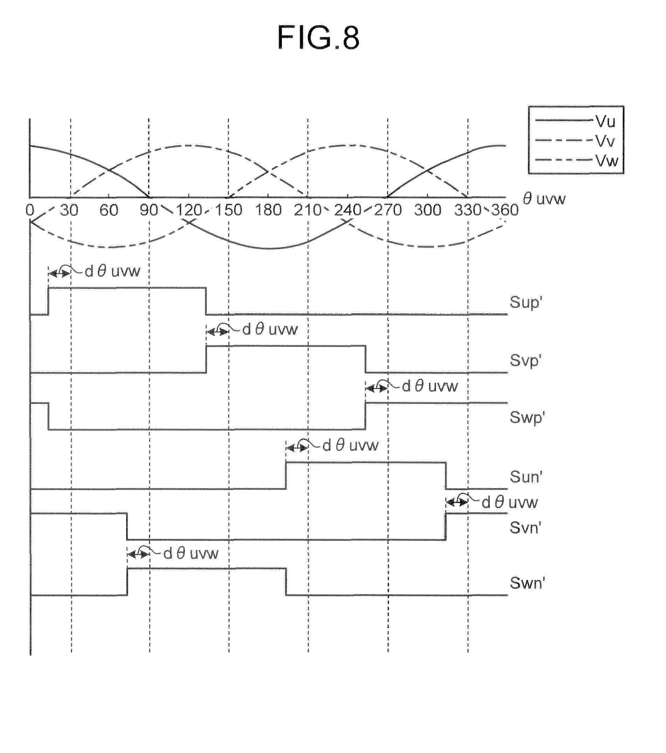

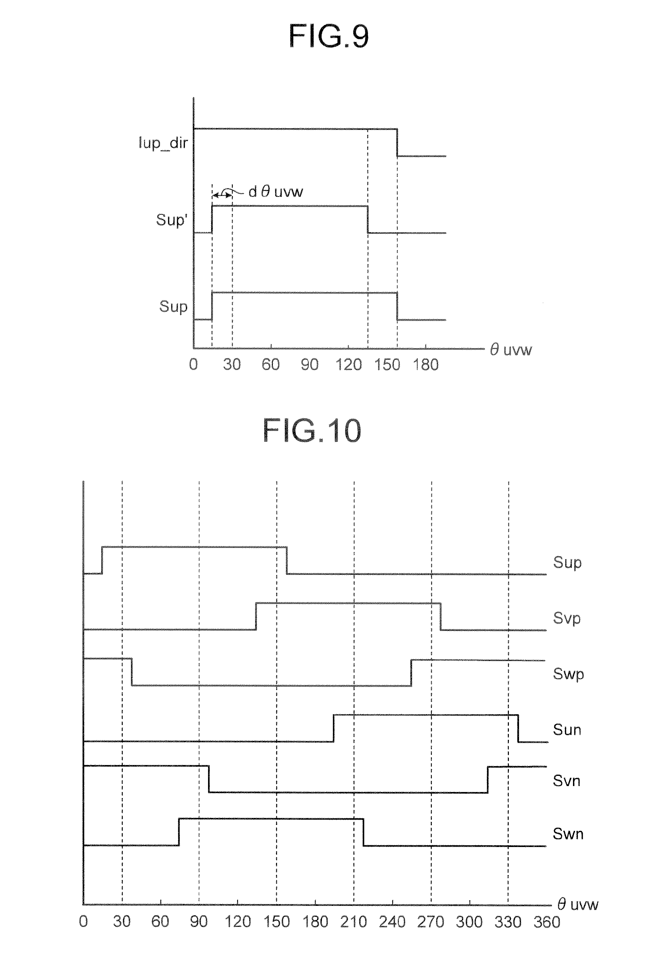

FIG. 7 is a diagram illustrating an example of the specific configuration of the AC generator pulse pattern generator 77 according to the embodiment. FIG. 8 is a diagram illustrating the relation between intermediate signals Sup' to Swn' and the generator phase θuvw according to the embodiment. FIG. 9 is a diagram illustrating an example of the operation of the AC generator pulse pattern generator 77 according to the embodiment. FIG. 10 is a diagram illustrating pulse patterns of the switch drive signals Sup to Swn generated by the AC generator pulse pattern generator 77 according to the embodiment.

As illustrated in FIG. 7, the AC generator pulse pattern generator 77 includes phase shifters 771 and 772, a U-phase pulse pattern generator 90a, a V-phase pulse pattern generator 90b, and a W-phase pulse pattern generator 90c.

The phase shifter 771 subtracts a 120 degrees phase from the corrected generator phase θuvw' received from the adder 75 (see FIG. 3), and outputs the resultant phase to the V-phase pulse pattern generator 90b. The phase shifter 772 subtracts a 240 degrees phase from the corrected generator phase θuvw' received from the adder 75, and outputs the resultant phase to the W-phase pulse pattern generator 90c. The U-phase pulse pattern generator 90a receives an input of the corrected generator phase θuvw' from the adder 75.

The U-phase pulse pattern generator 90a receives an input of the generator current value Iu. The V-phase pulse pattern generator 90b receives an input of the generator current value Iv. The W-phase pulse pattern generator 90c receives an input of the generator current value Iw.

The U-phase pulse pattern generator 90a generates switch drive signals Sup and Sun for controlling a current to be supplied to the U phase of the rotary electric machine 3, and outputs the switch drive signals Sup and Sun to the GeGr switch drive signal generator 78 and to the GrGe switch drive signal generator 79, respectively (see FIG. 3).

The V-phase pulse pattern generator 90b generates switch drive signals Svp and Svn for controlling a current to be supplied to the V phase of the rotary electric machine 3, and outputs the switch drive signals Svp and Svn to the GeGr switch drive signal generator 78 and to the GrGe switch drive signal generator 79, respectively (see FIG. 3). The switch drive signals Svp and Svn are signals whose phases are delayed by 120 degrees from the switch drive signals Sup and Sun, respectively.

The W-phase pulse pattern generator 90c generates switch drive signals Swp and Swn for controlling a current to be supplied to the W phase of the rotary electric machine 3, and outputs the switch drive signals Swp and Swn to the GeGr switch drive signal generator 78 and to the GrGe switch drive signal generator 79, respectively (see FIG. 3). The switch drive signals Swp and Swn are signals whose phases are delayed by 240 degrees from the switch drive signals Sup and Sun, respectively.

The configurations of the V-phase pulse pattern generator 90b and of the W-phase pulse pattern generator 90c are the same as that of the U-phase pulse pattern generator 90a. The configuration and the operation of the U-phase pulse pattern generator 90a will now be explained in detail. Elements in the V-phase pulse pattern generator 90b and in the W-phase pulse pattern generator 90c that are same as those in the U-phase pulse pattern generator 90a will then be assigned with the same reference numerals, and the configurations and the operations of the V-phase pulse pattern generator 90b and the W-phase pulse pattern generator 90c will then be explained briefly. In the explanation hereunder, the direction of a current from the rotary electric machine 3 toward the power conversion unit 10 is referred to as a "positive" direction, and the direction of a current from the power conversion unit 10 toward the rotary electric machine 3 is referred to as a "negative" direction.

The U-phase pulse pattern generator 90a generates a pulse pattern of each of the switch drive signals Sup and Sun for suppressing a surge voltage produced when switching control is performed to shut down a current supplied to the U phase of the rotary electric machine 3 while the current is flowing through the U phase of the rotary electric machine 3.

The U-phase pulse pattern generator 90a includes a positive-direction current pulse pattern generator 91p, a negative-direction current pulse pattern generator 91n, comparators 92p and 92n, and surge-suppressing pulse pattern generators 93p and 93n.

The positive-direction current pulse pattern generator 91p generates an intermediate signal Sup' based on the corrected generator phase θuvw' within a phase range allowing a current to flow into the U phase of the rotary electric machine 3 in the "positive" direction, and outputs the intermediate signal Sup' to the surge-suppressing pulse pattern generator 93p. The negative-direction current pulse pattern generator 91n generates an intermediate signal Sun' based on the corrected generator phase θuvw' within a phase range allowing a current to flow into the U phase of the rotary electric machine 3 in the "negative" direction, and outputs the intermediate signal Sun' to the surge-suppressing pulse pattern generator 93n.

The positive-direction current pulse pattern generator 91p has a pulse pattern of the intermediate signal Sup' in a phase range allowing a current to flow in the positive direction, among the 120-degree conduction control currents whose phase is delayed by 90 degrees from the U phase of the rotary electric machine 3, and outputs the intermediate signal Sup' whose phase is shifted by the corrected generator phase θuvw'. The negative-direction current pulse pattern generator 91n has a pulse pattern of the intermediate signal Sun' in a phase range allowing a current to flow in the negative direction, among the 120-degree conduction control currents whose phase is delayed by 90 degrees from the U phase of the rotary electric machine 3, and outputs the intermediate signal Sun' whose phase is shifted by the corrected generator phase θuvw'.

The corrected generator phase θuvw' is acquired by adding the generator phase correction value dθuvw, acquired in a manner bringing a system reactive current deviation being a deviation to zero, to the generator phase θuvw. Therefore, the positive-direction current pulse pattern generator 91p outputs, using the corrected generator phase θuvw' as a reference, the intermediate signal Sup' allowing supply of a current delayed by 90°-dθuvw from the U phase voltage value Vu, the V phase voltage value Vv, and the W phase voltage value Vw of the rotary electric machine 3 as illustrated in FIG. 8. The negative-direction current pulse pattern generator 91n outputs the intermediate signal Sun' whose phase is shifted by 180 degrees from the intermediate signal Sup' output from the positive-direction current pulse pattern generator 91p. In this manner, a reactive current at a level equal to the system reactive current command IQref can be supplied to the power system 2.

The comparator 92p compares the U-phase generator current value Iu received from the current detector 16 (see FIG. 1) with a predetermined threshold thp. In this example, the threshold thp is specified as "zero". The comparator 92p outputs a reference signal Iup_dir to the surge-suppressing pulse pattern generator 93p. The reference signal Iup_dir is set to the high level when the generator current value Iu is equal to or higher than the threshold thp, and set to the low level when the generator current value Iu is lower than the threshold thp.

The comparator 92n compares the U-phase generator current value Iu received from the current detector 16 (see FIG. 1) with a predetermined threshold thn. In this example, the threshold thn is specified as "zero". The comparator 92n outputs a reference signal Iun_dir to the surge-suppressing pulse pattern generator 93n. The reference signal Iun_dir is set to the high level when the generator current value Iu is lower than the threshold thn, and set to the low level when the generator current value Iu is equal to or higher than the threshold thn.

The surge-suppressing pulse pattern generator 93p generates a pulse pattern of a switch drive signal Sup that is switched from the low level to the high level at the timing at which the intermediate signal Sup' is switched from the low level to the high level, as illustrated in FIG. 9. When the intermediate signal Sup' is switched to the low level thereafter, the surge-suppressing pulse pattern generator 93p refers to the reference signal Iup_dir.

If the reference signal Iup_dir is at the high level, that is, if the positive-direction current is flowing through the U phase at the timing at which the intermediate signal Sup' is switched to the low level, the surge-suppressing pulse pattern generator 93p keeps the switch drive signal Sup at the high level.

Subsequently, at the timing at which the reference signal Iup_dir is switched from the high level to the low level, the surge-suppressing pulse pattern generator 93p generates a pulse pattern in which the switch drive signal Sup is switched from the high level to the low level.

If the reference signal Iup_dir is at the low level at the timing at which the intermediate signal Sup' is switched from the high level to the low level, the surge-suppressing pulse pattern generator 93p generates a pulse pattern in which the switch drive signal Sup is switched unconditionally to the low level.

The surge-suppressing pulse pattern generator 93n receiving the inputs of the intermediate signal Sun' and the reference signal Iun_dir generates a pulse pattern of the switch drive signal Sun by performing the same operation as that of the surge-suppressing pulse pattern generator 93p.

In other words, the surge-suppressing pulse pattern generator 93n generates a switch drive signal Sun that is switched to the high level at the timing at which the intermediate signal Sun' is switched to the high level, and is switched to the low level at the timing at which the negative-direction current stops flowing into the U phase.

In this manner, the U-phase pulse pattern generator 90a generates the switch drive signal Sup, and the switch drive signal Sun whose phase is delayed by 180 degrees from the switch drive signal Sup, as illustrated in FIG. 10.

With the U-phase pulse pattern generator 90a, generation of a surge voltage due to a current shutdown can be suppressed, by preventing the switching control for shutting down the U phase current from being performed while a current is flowing through the U phase of the rotary electric machine 3 in the positive or the negative direction.

In the example described above, both of the predetermined thresholds thp and thn are set to "zero". However, the threshold thp may also be a positive value within a range not affecting the power conversion unit 10 and capable of suppressing a surge voltage. Furthermore, the threshold thn may also be a negative value capable of suppressing a surge voltage.

The V-phase pulse pattern generator 90b generates the switch drive signals Svp and Svn illustrated in FIG. 10, by performing the same operation as that of the U-phase pulse pattern generator 90a. The W-phase pulse pattern generator 90c generates the switch drive signals Swp and Swn illustrated in FIG. 10 by performing the same operation as that of the U-phase pulse pattern generator 90a.

In this manner, the AC generator pulse pattern generator 77 advances the timing at which the switch drive signals Sup to Swn are set to the high level from that in the pulse patterns in the 120-degree conduction control, which is delayed by 90 degrees from the generator voltage phase θuvw.

After setting the switch drive signals Sup to Swn to the high level, the AC generator pulse pattern generator 77 delays the timing at which these switch drive signals Sup to Swn are switched to the low level until the absolute values of the respective generator current values Iu, Iv, and Iw become equal to or lower than the predetermined thresholds thp and thn. In this manner, generation of a surge voltage due to a current shutdown can be suppressed.

Furthermore, in the pulse pattern generator 43, the limiter 75a (see FIG. 3) limits the generator phase correction value dθuvw output to the adder 75 to a value less than 30 degrees, as mentioned earlier. Therefore, the switch drive signals Sup and Sun illustrated in FIG. 10 are prevented from being set to the high level simultaneously. The switch drive signals Svp and Svn are also prevented from being set to the high level simultaneously, and the switch drive signals Swp and Swn are prevented from being set to the high level simultaneously.

The AC generator pulse pattern generator 77 also outputs the switch drive signals Sup to Swn illustrated in FIG. 10 to keep the switching elements that pass a current between any two of the phases of the rotary electric machine 3 ON. For example, as illustrated in FIG. 10, within the ranges $0° \leq θuvw-dθuvw<30°$ and $330° \leq θ_{RST}<360°$, there are three states of the switch drive signals. In the first state, the switch drive signals Swp, Sun, and Svn are set to the high level, while the others are set to the low level. In the second state, the switch drive signals Swp and Svn are set to the high level, while the others are set to the low level. In the last state, the switch drive signals Sup, Swp, and Svn are set to the high level, while the others are set to the low level. During any of these states, a current flow is ensured between the W phase and the U phase and between the W phase and the V phase, between the W phase and the V phase, or between the U phase and the V phase and between the W phase and the V phase.

Similarly, within the range $30° \leq θuvw-dθuvw<90°$, the switch drive signals Sup, Swp, and Svn, the switch drive signals Sup and Svn, or the switch drive signals Sup, Svn, and Swn are set to the high level, thus allowing a current to flow between the U phase and the V phase and between the W phase and the V phase, between the U phase and the V phase, or between the U phase and the V phase and between the U phase and the W phase, respectively. Within the range $90° \leq θuvw-dθuvw<150°$, the switch drive signals Sup, Svn, and Swn, the switch drive signals Sup and Swn, or the switch drive signals Sup, Svp, and Swn are set to the high level, thus allowing a current to flow between the U phase and the V phase and between the U phase and the W phase, between U phase and the W phase, between the U phase and the W phase and between the V phase and the W phase, respectively. Within the range $150° \leq θuvw-dθuvw<210°$, the switch drive signals Sup, Svp, and Swn, the switch drive signals Svp and Swn, or the switch drive signals Svp, Sun, and Swn are set to the high level, thus allowing a current to flow between the U phase and the W phase and between the V phase and the W phase, between the V phase and the W phase, or between the V phase and the U phase and between the V phase and the W phase, respectively.

Within the range $210° < θuvw-dθuvw<270°$, the switch drive signals Svp, Sun, and Swn, the switch drive signals Svp and Sun, or the switch drive signals Svp, Swp, and Sun are set to the high level, thus allowing a current to flow between the V phase and the U phase and between the V phase and the W phase, between the V phase and the U phase, or between the V phase and the U phase and between the W phase and the U phase, respectively. Within the range $270° \leq θuvw-dθuvw<330°$, the switch drive signals Svp, Swp, and Sun, the switch drive signals Swp and Sun, or the switch drive signals Swp, Sun, and Svn are set to the high level, thus allowing a current to flow between the V phase and the U phase and between the W phase and the U phase, between the W phase and the U phase, or between the W phase and the U phase and between the W phase and the V phase, respectively.

The GeGr switch drive signal generator 78 generates switch drive signals Sur, Sus, Sut, Svr, Svs, Svt, Swr, Sws, and Swt using Formula (2) below based on the switch drive signals Srn, Ssn, Stn, Sup, Svp, Swp.

$$\begin{pmatrix} Sur & Svr & Swr \\ Sus & Svs & Sws \\ Sut & Svt & Swt \end{pmatrix} = \begin{pmatrix} Srn \\ Ssn \\ Stn \end{pmatrix} \begin{pmatrix} Sup & Svp & Swp \end{pmatrix} \dots (2)$$

In Formula (2), the switch drive signals Sur, Sus, Sut, Svr, Svs, Svt, Swr, Sws, and Swt are signals for driving the unidirectional switching elements 31 and 32 in the bidirectional switches Sw1 to Sw9 illustrated in FIG. 11 in a manner causing currents to flow in a direction from the rotary electric machine 3 toward the power system 2. FIG. 11 is a diagram illustrating a configuration example of the power conversion unit 10. In the configuration example of the power conversion unit 10 illustrated in FIG. 11, the configuration of each of the bidirectional switches Sw1 to Sw9 is different from the example illustrated in FIG. 2. In other words, in the bidirectional switches Sw1 to Sw9 illustrated in FIG. 11, the collectors of the unidirectional switching elements 31 and 32 in each of the bidirectional switches Sw1 to Sw9 illustrated in FIG. 2 are connected to the diodes 33, 34. The bidirectional switches Sw1 to Sw9 illustrated in FIG. 11 having such a connection configuration provide the same operations as those of the bidirectional switches Sw1 to Sw9 illustrated in FIG. 2.

The GrGe switch drive signal generator 79 generates switch drive signals Sru, Ssu, Stu, Srv, Ssv, Stv, Srw, Ssw, Stw using Formula (3) below based on the switch drive signals Sun, Svn, Swn, Srp, Ssp, and Stp.

$$\begin{pmatrix} Sru & Srv & Srw \\ Ssu & Ssv & Ssw \\ Stu & Stv & Stw \end{pmatrix} = \begin{pmatrix} Sun \\ Svn \\ Swn \end{pmatrix} \begin{pmatrix} Srp & Ssp & Stp \end{pmatrix} \dots (3)$$

In Formula (3), the switch drive signals Sru, Ssu, Stu, Srv, Ssv, Stv, Srw, Ssw, and Stw are signals for driving the unidirectional switching elements 31 and 32 in the bidirectional switches Sw1 to Sw9 illustrated in FIG. 11 in a manner causing currents to flow in a direction from the power system 2 toward the rotary electric machine 3.

The pulse pattern generator 43 outputs the switch drive signals Sur, Sru, Sus, Ssu, Sut, Stu, Svr, Srv, Svs, Ssv, Svt, Stv, Swr, Srw, Sws, Ssw, Swt, and Stw thus generated to the power conversion unit 10 as the switch drive signals S1 to S18, in a mapping relation illustrated in FIG. 11.

Some of the unidirectional switching elements 31 and 32 constituting the bidirectional switches Sw1 to Sw9 are kept ON to allow a current to flow between any two of the phases of the power system 2 and to allow a current to flow between a pair of any of the phases of or between two pairs of any of the phases of the rotary electric machine 3.

One or two of the switch drive signals Srn, Ssn, and Stn are set to the high level, and one of the switch drive signals Sup, Svp, and Swp is kept at the high level. Therefore, one or two of the unidirectional switching elements 31 and 32 allowing a current to flow in a direction from the power system 2 toward the rotary electric machine 3 are kept ON, among those constituting the bidirectional switches Sw1 to Sw9.

Because one or two of the switch drive signals Sun, Svn, and Swn are set to the high level, and one of the switch drive signals Srp, Ssp, and Stp are set to the high level, one or two of the unidirectional switching elements 31 and 32 allowing a current to flow in a direction from the rotary electric machine 3 toward the power system 2 are kept ON, among those constituting the bidirectional switches Sw1 to Sw9.

Because two or three of the switch drive signal Sup, Svp, Swp, Sun, Svn, and Swn are set to the high level, two or three of the unidirectional switching elements 31 and 32 constituting the bidirectional switches Sw1 to Sw9 are switched ON.

In the manner described above, the controller 15 in the matrix converter 1 according to the embodiment includes the first drive controller 20 and the second drive controller 21. The first drive controller 20 performs power conversion by means of the voltage control that is performed while both of the unidirectional switching elements 31 and 32 constituting each of the bidirectional switches Sw1 to Sw9 are switched ON. The second drive controller 21 performs power conversion by means of the current control performed while keeping some of the unidirectional switching elements 31 and 32 constituting the bidirectional switches Sw1 to Sw9 ON.

The matrix converter 1 performs power conversion control by the first drive controller 20 if the voltage of the power system 2 exceeds a predetermined value and performs power conversion control by the second drive controller 21 if the voltage of the power system 2 is the predetermined value or less. This can cause the matrix converter 1 to continue power conversion operation while passing a reactive current to the power system 2 side even when the power system 2 becomes low voltage.

Furthermore, the matrix converter 1 advances the timing at which the unidirectional switching elements 31 and 32 are switched ON from that in the pulse pattern in the 120-degree conduction control, which is delayed by 90 degrees from the generator phase θuvw, and also extends the period over which the unidirectional switching elements 31 and 32 are kept ON from that in the 120-degree conduction control. In this manner, a reactive current at a level equal to the system reactive current command IQref can be supplied to the power system 2, thereby suppressing the influence of a surge voltage to the power conversion unit 10.

Furthermore, the matrix converter 1 includes the current detector 16 that detects a current level at each of the phases of the rotary electric machine 3. After the unidirectional switching elements 31 and 32 are switched ON, the timing at which the unidirectional switching elements 31 and 32 are switched OFF is delayed until the absolute values of the currents detected by the current detector 16 reach a level equal to or lower than a predetermined threshold. Hence, it is possible to prevent the unidirectional switching elements 31 and 32 from being switched OFF while a current is still flowing through each of the phases of the rotary electric machine 3, and to suppress generation of a surge voltage more reliably.

In a power generation system, in some cases reactive power is required to be supplied to the power system 2 when the power system 2 becomes low voltage caused by a power failure or the like. The matrix converter 1 according to the present embodiment can address the requirement appropriately.

When the system reactive current command IQref that defines the magnitude of reactive power is transmitted from the manager side of the power system 2, the system reactive current command IQref may be output from the system reactive current command unit 62 to a subtractor. This can externally set the magnitude of the reactive current of the power system 2 side.

The second drive controller 21 employs the current type inverter model 80 as a switching model. The converter 81 is given a switching pattern of 120-degree conduction control that passes a current advanced by 90 degrees from a voltage waveform. The inverter 82 is given a switching pattern of 120-degree conduction control having a phase for passing a reactive current of the magnitude according to the system reactive current command IQref. The switching pattern given to the converter 81 and the switching pattern given to the inverter 82 are combined with each other and are output as the switch drive signals for the unidirectional switching elements 31 and 32 constituting the bidirectional switches Sw1 to Sw9.

Because this processing causes the switch drive signals for the unidirectional switching elements 31 and 32 constituting the bidirectional switches Sw1 to Sw9 to be output, the reactive current of the magnitude according to the system reactive current command IQref can be passed to the power system 2 easily and with high precision.

Furthermore, in the embodiment described above, a switching pattern is generated based on the switching pattern in the 120-degree conduction control, and the power conversion unit 10 is driven with the switching pattern. However, the controlling method is not limited thereto. In other words, the switching pattern may be any pattern allowing a power conversion operation to be continued while a reactive current is allowed to flow in a direction toward the power system 2 by means of the current control individually controlling the unidirectional switching elements 31 and 32, and various modifications are possible.

The above embodiment describes the rotary electric machine 3 as a synchronous generator. However, the rotary electric machine 3 may be an induction generator. When the rotary electric machine 3 is the induction generator, the matrix converter 1 is, for example, configured as follows.

After the occurrence of a power failure, the induction generator generates a generated voltage caused by residual flux, and the position detector 4 detects the rotation speed of the induction generator. According to a known vector control rule for induction machines, with a torque command for the induction generator set to be nearly zero, the controller 15 generates a slip frequency command based on the torque command and adds it to the rotation speed detected by the position detector 4 to generate an output frequency command.

The controller 15 generates the generator phase θuvw by integrating the output frequency command and adds the generated generator phase θuvw to the generator phase compensation value dθuvw to generate the generator corrected phase θuvw'. This can continue power conversion operation while passing a reactive current to the power system 2 side even when the power system 2 becomes low voltage.

The above embodiment describes an example of adopting a generator as the rotary electric machine 3. However, a motor may be adopted as the rotary electric machine 3. Even when the voltage of the power system 2 becomes low, operation can be continued through the speed electromotive force of the motor.

In other words, although when the voltage of the power system 2 becomes low, power supply from the power system 2 to the motor becomes hard, and yet a rotor of the motor is in a rotating state while it is slowing down. In view of this, electromotive force generated by the rotation is, for example, supplied to the power system 2 as reactive power, thereby continuing operation.

Furthermore, explained as an example of the active current compensator 41 in the embodiment described above is the configuration illustrated in FIG. 3, but the active current compensator 41 may also have a configuration using a table. In other words, the active current compensator 41 may be provided with a storage unit storing therein a two-dimensional table indicating the relation between the system active current IP, the system reactive current IQ, and the system phase compensating value dθrst, and may output a system phase compensating value dθrst from the table based on the system phase current values Ir, Is, and It. Furthermore, the system phase compensating value dθrst may be acquired and output using a calculation of - $\tan^{-1}$ (IQ/IP).

The above embodiment describes the configuration illustrated in FIG. 3 as an example of the reactive current compensator 42. However, the reactive current compensator 42 may have a configuration using a table. In other words, the reactive current compensator 42 provides a storage unit that stores therein a table indicating the relation between the system reactive current command IQref and the generator phase correction value dθuvw, and the generator phase correction value dθuvw may be output from the table based on the system reactive current command IQref.

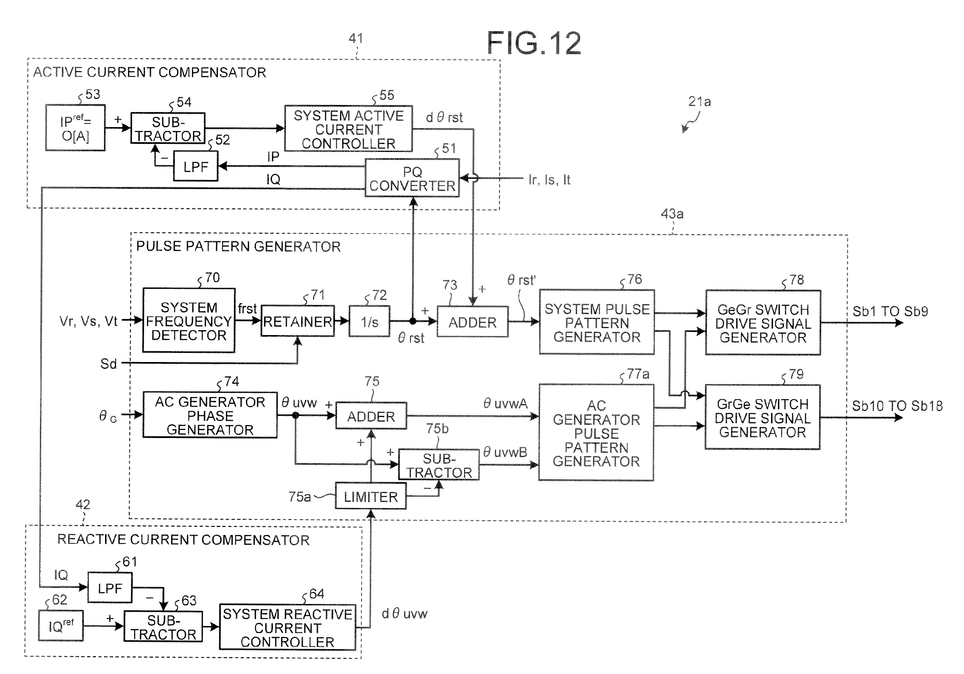

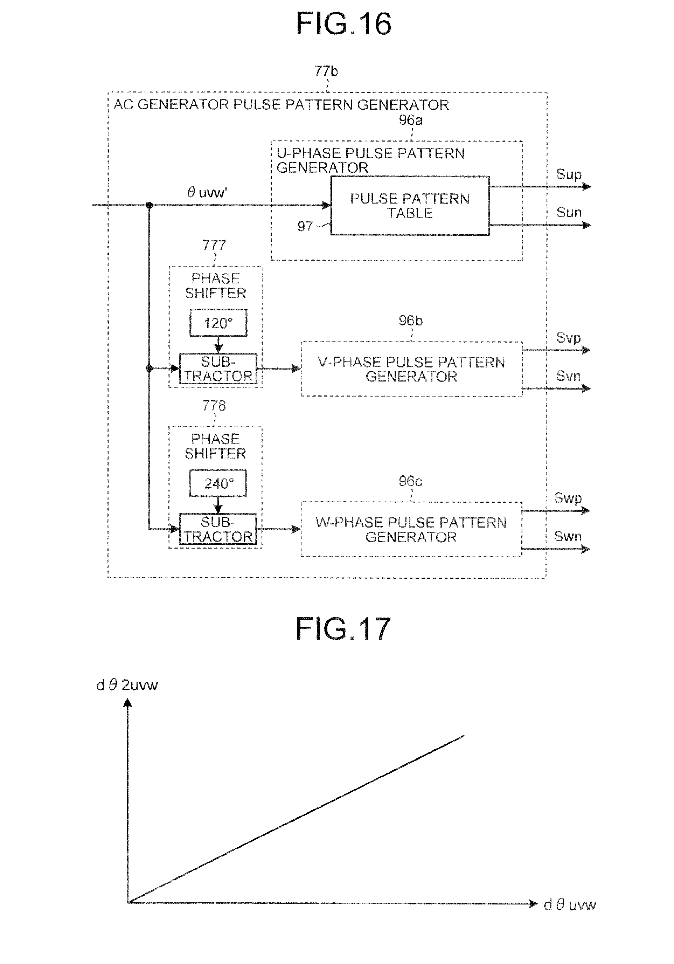

Furthermore, the configuration of the second drive controller 21 illustrated in FIG. 3 and the configuration of the AC generator pulse pattern generator 77 illustrated in FIG. 7 are merely exemplary, and a surge voltage can be suppressed using other configurations. A second drive controller 21a according to a first modification capable of suppressing a surge voltage will now be explained with reference to FIGS. 12 to 15, and an AC generator pulse pattern generator 77b according to a second modification capable of suppressing a surge voltage will be explained with reference to FIGS. 16 to 18.

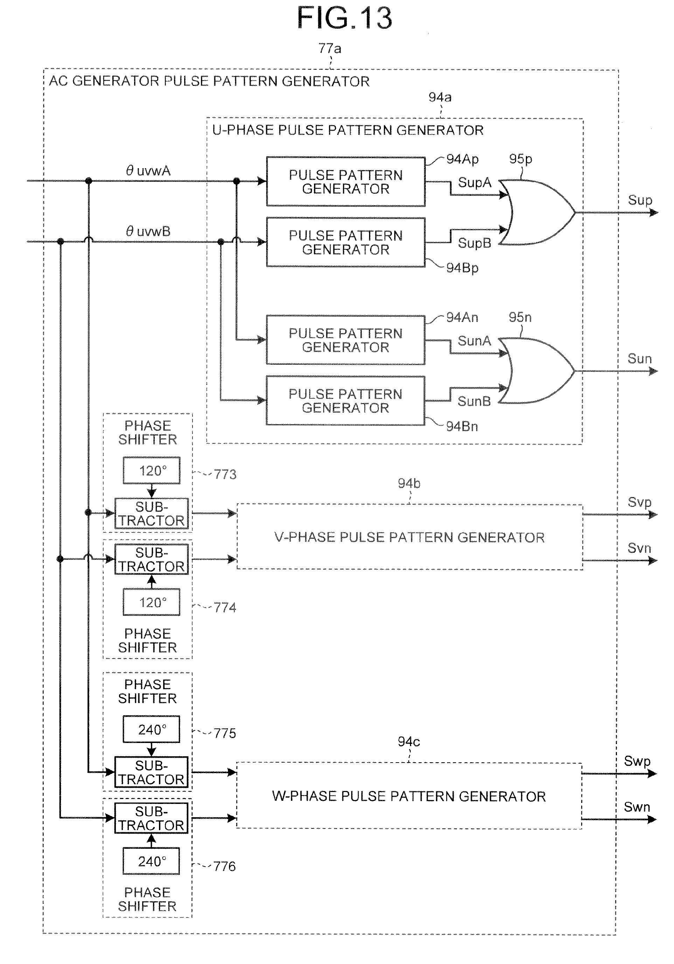

To begin with, the second drive controller 21a according to the first modification will be explained. FIG. 12 is a diagram illustrating the configuration of the second drive controller 21a according to the first modification. FIG. 13 is a diagram illustrating the configuration of the AC generator pulse pattern generator 77a according to the first modification.

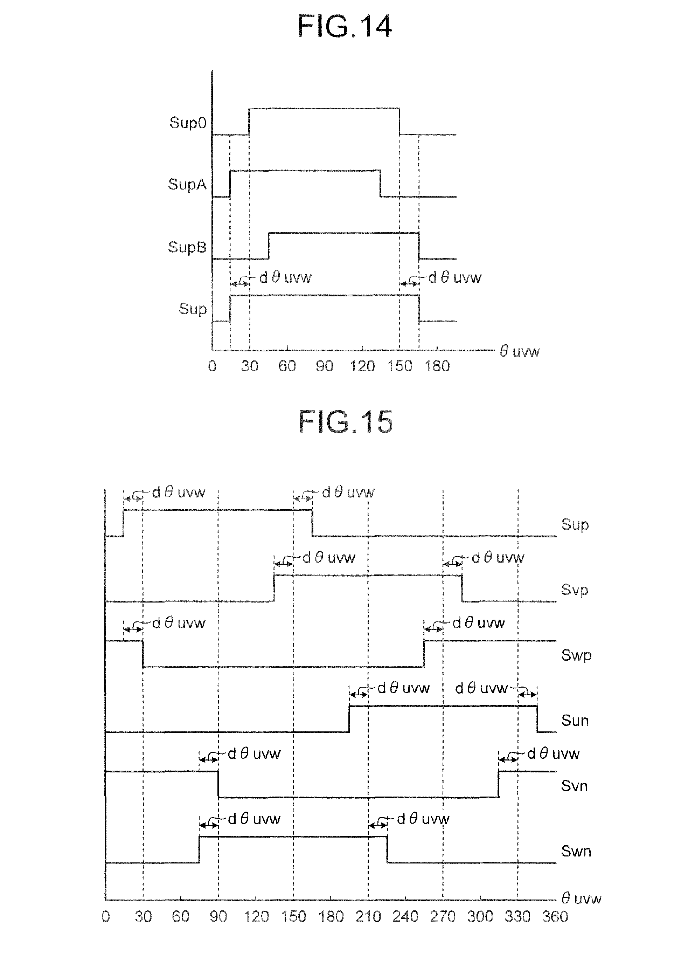

FIG. 14 is a diagram illustrating an example of the operation of the AC generator pulse pattern generator 77a according to the first modification. FIG. 15 is a diagram illustrating pulse patterns of the switch drive signals generated by the AC generator pulse pattern generator 77a according to the first modification. Among the elements illustrated in FIG. 12, those that are the same as those illustrated in FIG. 3 are assigned with the same reference numerals in FIG. 3, and explanations thereof are omitted hereunder.

As illustrated in FIG. 12, the second drive controller 21a is different from the second drive controller 21 illustrated in FIG. 3 in that a pulse pattern generator 43a includes a subtractor 75b, and that an AC generator pulse pattern generator 77a has a different configuration.

The subtractor 75b subtracts the generator phase correction value dθuvw input from the limiter 75a from the generator phase θuvw input from the AC generator phase generator 74 to generate a corrected generator phase θuvwB, and outputs the corrected generator phase θuvwB to the AC generator pulse pattern generator 77a. The adder 75 adds the generator phase correction value dθuvw to the generator phase θuvw to generate the corrected generator phase θuvwA, and outputs the corrected generator phase θuvwA to the AC generator pulse pattern generator 77a. The corrected generator phase θuvwA is the same as the corrected generator phase θuvw' illustrated in FIG. 3.

The AC generator pulse pattern generator 77a generates the pulse patterns of the switch drive signals Sup to Swn for driving the switching elements in the inverter 82 illustrated in FIG. 5 based on these two corrected generator phases θuvwA and θuvwB.

Specifically, the AC generator pulse pattern generator 77a includes phase shifters 773 to 776, a U-phase pulse pattern generator 94a, a V-phase pulse pattern generator 94b, and a W-phase pulse pattern generator 90c, as illustrated in FIG. 13.

The phase shifter 773 subtracts a 120 degrees phase from the corrected generator phase θuwvA, and outputs the resultant phase to the V-phase pulse pattern generator 94b. The phase shifter 774 subtracts a 120 degrees phase from the corrected generator phase θuvwB, and outputs the resultant phase to the V-phase pulse pattern generator 94b. The phase shifter 775 subtracts a 240 degrees phase from the corrected generator phase θuvwA, and outputs the resultant phase to the W-phase pulse pattern generator 94c. The phase shifter 776 subtracts a 240 degrees phase from the corrected generator phase θuvwB, and outputs the resultant phase to the W-phase pulse pattern generator 94c.

The U-phase pulse pattern generator 94a includes four pulse pattern generators 94Ap, 94Bp, 94An, and 94Bn, and two OR logic circuits 95p and 95n.

The pulse pattern generator 94Ap generates an intermediate signal SupA corresponding to the corrected generator phase θuvwA within a phase range allowing a current to flow into the U phase of the rotary electric machine 3 in the positive direction, and outputs the intermediate signal SupA to the OR logic circuit 95p. The intermediate signal SupA is the same signal as the intermediate signal Sup' in FIG. 8, and is a signal whose phase is advanced by the generator phase correction value dθuvw from the intermediate signal Sup0 that is generated when the generator phase correction value dθuvw is not added to the generator phase θuvw, as illustrated in FIG. 14.

The pulse pattern generator 94Bp generates an intermediate signal SupB corresponding to the corrected generator phase θuvwB within a phase range allowing a current to flow into the U phase of the rotary electric machine 3 in the positive direction, and outputs the intermediate signal SupB to the OR logic circuit 95p. The corrected generator phase θuvwB is a phase resulting from subtracting the generator phase correction value dθuvw from the generator phase θuvw, as mentioned earlier. Therefore, the intermediate signal SupB is a signal delayed by the generator phase correction value dθuvw from the intermediate signal Sup0 that is generated when the generator phase correction value dθuvw is not added to the generator phase θuvw, as illustrated in FIG. 14.

The OR logic circuit 95p generates the switch drive signal Sup that is set to the high level during a phase period in which at least one of the two intermediate signals SupA and SupB is set to high. Therefore, as illustrated in FIG. 14, the switch drive signal Sup is set to the high level earlier than the intermediate signal Sup0 by the generator phase correction value $d\theta uvw$, and is set to the low level later than the intermediate signal Sup0 by the generator phase correction value $d\theta uvw$.

In this manner, in the first modification, when the U phase generator current value Iu is increased by advancing the timing at which the switch drive signal Sup is set to the high level by the generator phase correction value $d\theta uvw$, the timing at which the switch drive signal Sup is set to the low level is delayed by the generator phase correction value $d\theta uvw$. In this manner, the switching control for shutting down a current can be prevented from being performed while a large current is flowing into the U phase in the positive direction. This can suppress generation of a surge voltage due to a current shutdown.

Furthermore, the pulse pattern generator 94An generates an intermediate signal SunA corresponding to the corrected generator phase $\theta uvwA$ within a phase range allowing a current to flow into the U phase of the rotary electric machine 3 in the negative direction, and outputs the intermediate signal SunA to the OR logic circuit 95n. Furthermore, the pulse pattern generator 94Bn generates an intermediate signal SunB corresponding to the corrected generator phase $\theta uvwB$ within a phase range allowing a current to flow into the U phase of the rotary electric machine 3 in the negative direction, and outputs the intermediate signal SunB to the OR logic circuit 95n.

The OR logic circuit 95n generates the switch drive signal Sun that is set to the high level during a phase period in which at least one of the two intermediate signals SunA and SunB is set to high. The resultant switch drive signal Sun is a signal whose phase is delayed by 180 degrees from the switch drive signal Sup, as illustrated in FIG. 15. In this manner, the switching control for shutting down a current can be prevented from being performed while a large current is flowing into the U phase in the positive direction. This can suppress generation of a surge voltage due to a current shutdown.

The V-phase pulse pattern generator 94b has the same configuration and performs the same operation as those of the U-phase pulse pattern generator 94a to generate the switch drive signals Svp and Svn, except the V-phase pulse pattern generator 94b receives the phases resulting from subtracting 120 degrees phases from the corrected generator phases $\theta uvwA$ and $\theta uvwB$, respectively.

As illustrated in FIG. 15, the resultant switch drive signal Svp and switch drive signal Svn are signals whose phases are delayed by 120 degrees from the switch drive signal Sup and the switch drive signal Sun, respectively. In this manner, the switching control for shutting down a current can be prevented from being performed while a large generator current value Iv is flowing into the V phase, in the same manner as for the U phase. This can suppress generation of a surge voltage due to a current shutdown.

The W-phase pulse pattern generator 94c has the same configuration as that of the U-phase pulse pattern generator 94a, and performs the same operation to generate the switch drive signals Swp and Swn, except the W-phase pulse pattern generator 94c receives phases resulting from subtracting 240 degrees phases from the corrected generator phases $\theta uvwA$ and $\theta uvwB$, respectively.

The resultant switch drive signal Swp and switch drive signal Swn are signals whose phases are delayed by 240 degrees from the switch drive signal Sup and the switch drive signal Sun, respectively, as illustrated in FIG. 15. As a result, the switching control for shutting down a current can be prevented from being performed while a large generator current value Iw is flowing into the W phase, in the same manner as for the U phase. This can suppress generation of a surge voltage due to a current shutdown.

In this manner, the AC generator pulse pattern generator 77a delays the timing at which the switch drive signals Sup to Swn are set to the low level from that in the 120-degree conduction control, by the same period as that by which the timing at which the switch drive signals Sup to Swn are set to the high level is advanced from that in the 120-degree conduction control. In this manner, the current at the timing at which these signals are set to the low level can be reduced, so that generation of a surge voltage can be suppressed.

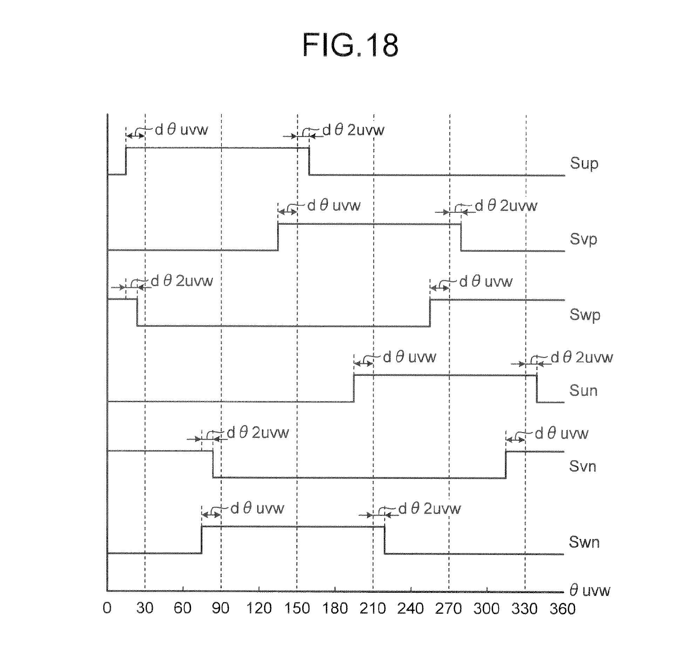

The AC generator pulse pattern generator 77b according to the second modification will now be explained. FIG. 16 is a diagram illustrating the configuration of the AC generator pulse pattern generator 77b according to the second modification. FIG. 17 is a diagram illustrating a pulse pattern table 97 according to the second modification. FIG. 18 is a diagram illustrating pulse patterns of switch drive signals Sup to Swn generated by the AC generator pulse pattern generator 77b according to the second modification.

The AC generator pulse pattern generator 77b generates pulse patterns of the switch drive signals Sup to Swn for driving the respective switching elements in the inverter 82 illustrated in FIG. 5, based on the corrected generator phase $\theta uvw'$ received from the adder 75 illustrated in FIG. 3.

Specifically, the AC generator pulse pattern generator 77b includes phase shifters 777 and 778, a U-phase pulse pattern generator 96a, a V-phase pulse pattern generator 96b, and a W-phase pulse pattern generator 96c, as illustrated in FIG. 16.

The phase shifter 777 subtracts a 120 degrees phase from the corrected generator phase $\theta uvw'$, and outputs the resultant phase to the V-phase pulse pattern generator 96b. The phase shifter 778 subtracts a 240 degrees phase from the corrected generator phase θuvw', and outputs the resultant phase to the W-phase pulse pattern generator 96c. To the U-phase pulse pattern generator 96a, the corrected generator phase θuvw' output from the adder (see FIG. 3) is input as it is.

The U-phase pulse pattern generator 96a includes the pulse pattern table 97. Each of the V-phase pulse pattern generator 96b and the W-phase pulse pattern generator 96c includes the pulse pattern table 97, which is the same as that in the U-phase pulse pattern generator 96a.

The pulse pattern table 97 is a table associating a period for which the switch drive signals Sup to Swn are set to high level, being advanced from the 120-degree conduction control, with a period for which these signals are set to the low level, being delayed from the 120-degree conduction control.

Specifically, the pulse pattern table 97 is a function indicating a corresponding relation between the generator phase correction value dθuvw and a surge-suppressing correction value dθ2uvw, as illustrated in FIG. 17. The surge-suppressing correction value dθ2uvw represents a phase range from when the switch drive signal Sup is set to the low level to when the current stops being supplied to the U phase in a case when the phase at which the switch drive signal Sup is set to the high level is advanced by the generator phase correction value dθuvw, for example.

The surge-suppressing correction value dθ2uvw can be acquired by conducting experiments in advance. For example, experiments are conducted in which the matrix converter 1 is operated while the setting of the generator phase correction value dθuvw is changed sequentially from "0 degrees" to "30 degrees", and the generator phase θuvw resulting in "zero" generator current values Iu, Iv, and Iw is acquired in each of these settings.

In such experiments, the generator phase θuvw resulting in "zero" generator current values Iu, Iv, and Iw may be acquired for other condition settings, such as the wiring length and the ambient temperature and humidity of the matrix converter 1 or the rotary electric machine 3, in addition to the settings of the generator phase correction value dθuvw.

Based on the generator phase θuvw acquired as a result of the experiments, the surge-suppressing correction value dθ2uvw is calculated, and a function indicating the relation between the surge-suppressing correction value dθ2uvw thus calculated and the generator phase correction value dθuvw (see FIG. 17) is then calculated. The function thus calculated is then provided to each of the U-phase pulse pattern generator 96a, the V-phase pulse pattern generator 96b, and the W-phase pulse pattern generator 96c, as the pulse pattern table 97.

When an input of the corrected generator phase θuvw' is received, the U-phase pulse pattern generator 96a outputs the switch drive signals Sup and Sun having the respective pulse patterns generated based on the corrected generator phase θuvw' and the pulse pattern table 97, as illustrated in FIG. 18. The switch drive signals Sup and Sun are set to the high level earlier by the generator phase correction value dθuwv and set to the low level later by the surge-suppressing correction value dθ2uvw than those when the generator phase correction value dθuvw is "0 degrees".

By outputting the switch drive signals Sup and Sun to the GeGr switch drive signal generator 78 and the GrGe switch drive signal generator 79, respectively, switching control for shutting down a current can be prevented from being performed while a current is still flowing into the U phase.

The V-phase pulse pattern generator 96b and the W-phase pulse pattern generator 96c perform respective operations in the same manner as the U-phase pulse pattern generator 96a, except the phase shifter 777 adds a 120 degrees phase to the corrected generator phase θuvw' before input to the V-phase pulse pattern generator 96b, and the phase shifter 778 adds a 240 degrees phase to the corrected generator phase θuvw' before input to the W-phase pulse pattern generator 96c.

Therefore, the V-phase pulse pattern generator 96b outputs the switch drive signal Svp whose phase is delayed by 120 degrees with respect to the switch drive signal Sup, and the switch drive signal Svn whose phase is delayed by delayed by 120 degrees with respect to the switch drive signal Sun. The W-phase pulse pattern generator 96c outputs the switch drive signal Swp whose phase is delayed by 240 degrees with respect to the switch drive signal Sup and the switch drive signal Swn whose phase is delayed by 240 degrees with respect to the switch drive signal Sun.

In this manner, the switching control for shutting down a current can be prevented from being performed while a current is flowing into the V phase, and the switching control for shutting down a current can be prevented from being performed while a current is flowing into the W phase.

Furthermore, the switching control explained in the embodiment, the first modification, or the second modification is also applicable to a serial multiplex matrix converter in which a power conversion cell including a plurality of power conversion cells connected serially in a plurality of steps is provided to each of the phases.

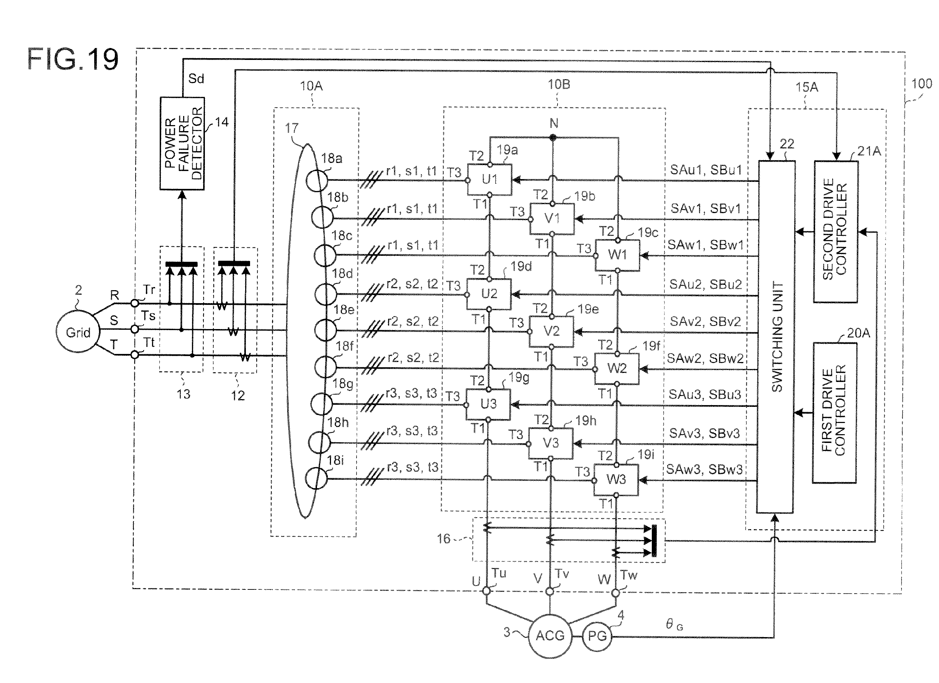

A serial multiplex matrix converter 100 in which the switching control explained the embodiment, the first modification, or the second modification is applied will now be explained with reference to FIGS. 19 to 21. FIG. 19 is a diagram illustrating a configuration example of the serial multiplex matrix converter 100 according to the embodiment.

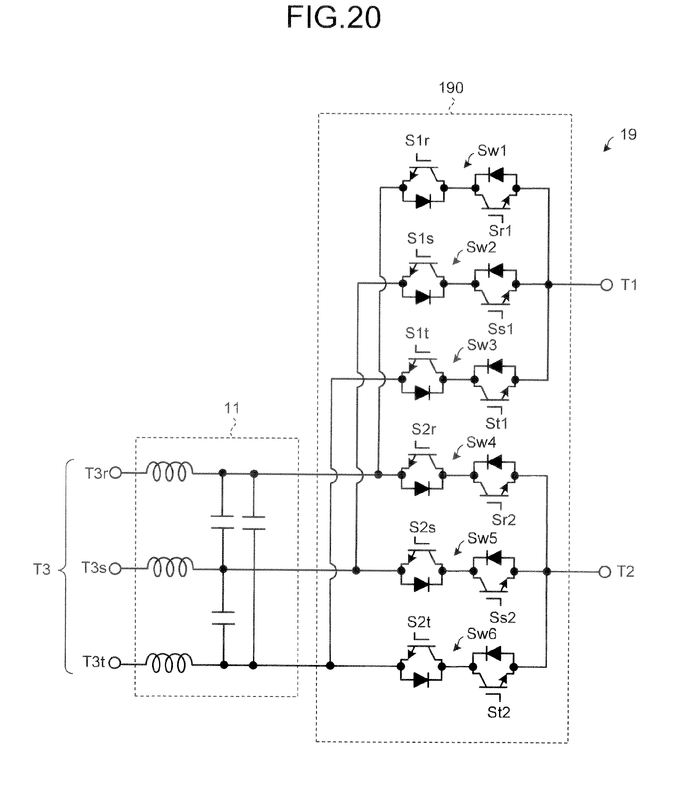

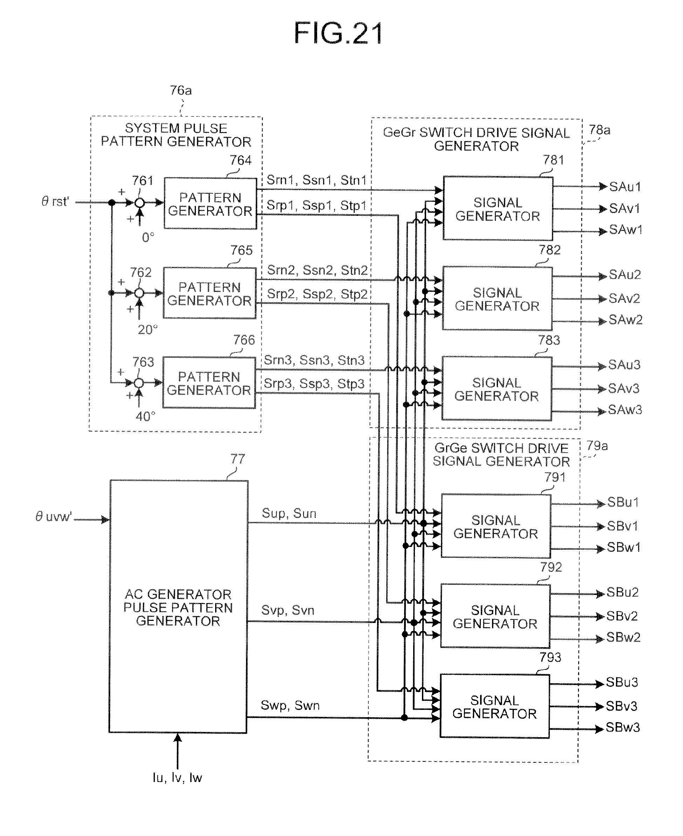

FIG. 20 is a diagram illustrating an example of the specific configuration of each of power conversion cells 19a to 19i (hereinafter, sometimes generally referred to as power conversion cells 19) illustrated in FIG. 19. FIG. 21 is a diagram illustrating the configurations of a system pulse pattern generator 76a, a GeGr switch drive signal generator 78a, and a GrGe switch drive signal generator 79a included in the serial multiplex matrix converter 100. In the drawings, among the elements illustrated in FIGS. 19 to 21, those that are the same as those illustrated in FIG. 1 or 3 are assigned with the same reference numerals as those in FIG. 1 or 3, and explanations thereof are omitted hereunder.

The serial multiplex matrix converter 100 illustrated in FIG. 19 is different from the matrix converter 1 illustrated in FIG. 1 in inclusion of a multiplex transformer 10A and a power conversion unit 10B instead of the power conversion unit 10 in the matrix converter 1 and in the switching control performed by a controller 15A. In the serial multiplex matrix converter 100, the LC filter 11 illustrated in FIG. 1 is provided in each of the power conversion cells 19 (see FIG. 20), which will be described later.

The multiplex transformer 10A includes a primary winding 17, and nine secondary windings 18a to 18i (hereinafter, sometimes generally referred to as secondary windings 18). The multiplex transformer 10A transforms the AC power supplied to the primary winding 17 from the power system 2 and outputs the power thus transformed to the nine secondary windings 18a to 18i. These nine secondary windings 18a to 18i are connected to the power conversion cells 19a to 19i, respectively, which will be described later.

The multiplex transformer 10A is a phase-shifting transformer generating a voltage phase difference between the primary winding 17 and at least some of the secondary windings 18. In the multiplex transformer 10A, the voltage phase of the three secondary windings 18 connected to three power conversion cell units that correspond to the U phase, the V phase, and the W phase, respectively, is shifted from one another by 20 degrees, as indicated in Table 1 below. Table 1 below indicates voltage phase differences between the primary winding 17 and the secondary windings 18.

[Table 1]

|  | Phase difference (degree) |
| --- | --- |
| First stage (r1, s1, t1) | 0 |
| Second stage (r2, s2, t2) | 20 |
| Third stage (r3, s3, t3) | 40 |

Specifically, for the U phase, the secondary winding 18d corresponding to the position U2 has a voltage phase difference of 20 degrees with respect to the secondary winding 18a corresponding to the position U1, and the secondary winding 18g corresponding to the position U3 has a voltage phase difference of 20 degrees with respect to the secondary winding 18d. Similarly, for the V phase, the secondary winding 18e corresponding to the position V2 has a voltage phase difference of 20 degrees with respect to the secondary winding 18b corresponding to the position V1, and the secondary winding 18h corresponding to the position V3 has a voltage phase difference of 20 degrees with respect to the secondary winding 18e.

For the W phase, the secondary winding 18f corresponding to the position W2 has a voltage phase difference of 20 degrees with respect to the secondary winding 18c corresponding to the position W1, and the secondary winding 18i corresponding to the position W3 has a voltage phase difference of 20 degrees with respect to the secondary winding 18f.

In this embodiment, the voltage phase difference between the primary winding 17 and the secondary windings 18a to 18c is assumed to be zero. Therefore, the voltage phase at the r1 phase, the s1 phase, and the t1 phase of the secondary windings 18a to 18c (hereinafter, referred to as a "voltage phase $\theta$rst1") is the same as a system phase $\theta$rst. The voltage phase at the r2 phase, the s2 phase, and the t2 phase of the secondary windings 18d to 18f (hereinafter, referred to as a "voltage phase $\theta$rst2") is shifted by 20 degrees with respect to the system phase $\theta$rst. The voltage phase at the r3 phase, the s3 phase, and the t3 phase of the secondary windings 18g to 18i (hereinafter, referred to as a "voltage phase $\theta$rst3") is shifted by 40 degrees with respect to the system phase $\theta$rst.

By providing voltage phase differences in the manner described above, a harmonic current present on the side of the primary winding 17 can be reduced. The voltage phase differences indicated in Table 1 are merely examples, and may have other values. Furthermore, such phase differences do not necessarily need to be provided. It is also possible to connect independent AC power supplies to the respective power conversion cells 19a to 19i, without using the multiplex transformer 10A.

The power conversion unit 10B includes nine power conversion cells 19 to which the nine secondary windings 18a to 18i are respectively connected. Each of the power conversion cells 19 performs power conversion between a corresponding terminal T3 (terminal T3r, T3s, or T3t to be described below) connected to the corresponding secondary winding 18 and terminals T1 and T2.

The secondary windings 18a to 18c are connected to the U phase power conversion cell 19a, to the V phase power conversion cell 19b, and to the W phase power conversion cell 19c, respectively, in the first stage. The secondary windings 18d to 18f are connected to the U phase power conversion cell 19d, to the V phase power conversion cell 19e, and to the W phase power conversion cell 19f, respectively, in the second stage. The secondary windings 18g to 18i are connected to the U phase power conversion cell 19g, to the V phase power conversion cell 19h, and to the W phase power conversion cell 19i, respectively, in the third stage.

In the power conversion unit 10B, an output phase is achieved by serially connecting the outputs of the three power conversion cells 19. In other words, a U phase power conversion cell unit is provided by the power conversion cells 19a, 19d, and 19g. A V phase power conversion cell unit is provided by the power conversion cells 19b, 19e, and 19h. A W phase power conversion cell unit is provided by the power conversion cells 19c, 19f, and 19i.

Specifically, the terminal T2 on the power conversion cells 19a is connected to a neutral point N. The terminal T1 on the power conversion cell 19a is connected to the terminal T2 on the power conversion cell 19d. The terminal T1 on the power conversion cell 19d is connected to the terminal T2 on the power conversion cell 19g. This provides the U phase power conversion cell unit in which the terminal T1 on the power conversion cell 19g serves as an output terminal.

In the same manner, the terminal T2 on the power conversion cell 19b is connected to the neutral point N. The terminal T1 on the power conversion cell 19b is connected to the terminal T2 on the power conversion cell 19e. The terminal T1 on the power conversion cell 19e is connected to the terminal T2 on the power conversion cell 19h. This provides the V phase power conversion cell unit in which the terminal T1 on the power conversion cell 19h serves as an output terminal.

The terminal T2 on the power conversion cell 19c is connected to the neutral point N. The terminal T1 on the power conversion cell 19c is connected to the terminal T2 on the power conversion cell 19f. The terminal T1 on the power conversion cell 19f is connected to the terminal T2 on the power conversion cell 19i. This provides the W phase power conversion cell unit in which the terminal T1 on the power conversion cell 19i serves as an output terminal.

The configuration of each of the power conversion cells 19 will now be explained. FIG. 20 is a diagram illustrating an example of the specific configuration of each of the power conversion cells 19. As illustrated in FIG. 20, each power conversion cell 19 includes a switch unit 190 and the corresponding LC filter 11. The power conversion cell 19 is also referred to as a single phase matrix converter. The power conversion cell 19 is also provided with a snubber circuit not illustrated, for example.

The switch unit 190 includes bidirectional switches Sw1 to Sw6. The bidirectional switches Sw1 to Sw3 are connected between the terminals T3r, T3s, and T3t and the terminal T1. The bidirectional switches Sw4 to Sw6 are connected between the terminals T3r, T3s, and T3t and the terminal T2. The bidirectional switches Sw1 to Sw6 has the same configuration as the bidirectional switches Sw1 to Sw9 illustrated in FIG. 11. The LC filter 11 has the same configuration as the LC filter 11 illustrated in FIG. 1. The configuration of the LC filter 11 is not limited to that illustrated in FIG. 1, and may not include a reactor for example.

Referring back to FIG. 19, the controller 15A includes a first drive controller 20A, a second drive controller 21A, and a switching unit 22. The first drive controller 20A generates a voltage command based on a torque command for instructing the amount of torque generated by the rotary electric machine 3, generates a switch drive signal for causing a voltage to be output to the rotary electric machine 3 based on the voltage command using a known PWM control method for a serial multiplex matrix converter, and outputs the switch drive signal to the power conversion unit 10B.

The voltage command is generated by applying a known vector control law of a synchronous generator based on the torque command. The power conversion unit 10B outputs the voltage based on the voltage command using the PWM control by keeping a plurality of unidirectional switching elements constituting each of the bidirectional switches Sw1 to Sw6 ON with the switch drive signals, and performs power conversion in which the level of a flowing current and the conduction direction are determined by the relation between the output voltage and a generated voltage.

The second drive controller 21A performs power conversion control by switching some of the unidirectional switching elements constituting the bidirectional switches Sw1 to Sw6 in the power conversion unit 10B ON based on the system phase voltage values Vr, Vs, and Vt, the system phase current values Ir, Is, and It, and the generator current values Iu, Iv, and Iw.

The conduction direction can be controlled by switching some of the unidirectional switching elements constituting the bidirectional switches Sw1 to Sw6. In this manner, even when the voltage of the power system 2 is extremely lower than that of the rotary electric machine 3, e.g., in the case of a power failure, it is possible to prevent a high current from flowing between the rotary electric machine 3 and the power system 2, and to continue the power conversion operation while performing the current control.

For example, the second drive controller 21A keeps the unidirectional switching elements that pass a current between two of the phases on the side of the secondary winding 18 ON, among those constituting the bidirectional switches Sw1 to Sw6 in the power conversion unit 10B. The second drive controller 21A also keeps the unidirectional switching elements that pass a current between two of the phases on the side of the rotary electric machine 3 ON, among those constituting the bidirectional switches Sw1 to Sw6 in the power conversion unit 10B. Such control allows a current to keep flowing between any two of the phases on the side of the secondary winding 18 and between any two of the phases of the rotary electric machine 3.

The switching unit 22 has the same configuration as the switching unit 22 illustrated in FIG. 1. The switching unit 22 outputs the switch drive signals generated by the first drive controller 20A to the power conversion unit 10B while the failure detection signal Sd output from the power failure detector 14 is at the low level.

When the failure detection signal Sd output from the power failure detector 14 is set to the high level, the switching unit 22 outputs the switch drive signals generated by the second drive controller 21A to the power conversion unit 10B.

When the voltage level in the power system 2 drops, power conversion control is performed in which the switch drive signals generated by the second drive controller 21A cause some of the unidirectional switching elements constituting the bidirectional switches Sw1 to Sw6 to be switched ON. In this manner, the power conversion operation can be continued even when the voltage level in the power system 2 drops.

The power failure detector 14 provided to the matrix converter 100 may also output the failure detection signal Sd based on the voltage at any of the secondary windings 18a to 18i. For example, when a secondary side voltage value Va1 is equal to or lower than a predetermined voltage value V11, the power failure detector 14 determines that a failure of the power system 2 has occurred, and outputs the failure detection signal Sd at the high level. When the secondary side voltage value Va1 is higher than the voltage value V11, the power failure detector 26 determines that no failure of the power system 2 has occurred, and outputs the failure detection signal Sd at the low level.

In such a case, for example, the power failure detector 14 converts voltage values Vr1, Vs1, and Vt1 of the respective r1 phase, s1 phase, and t1 phase of the secondary winding 18a to $\alpha\beta$ components of two orthogonal axes in a fixed coordinate system, and acquires a system voltage value $V_{\alpha}1$ in the $\alpha$ axis direction and a system voltage value $V_{\beta}1$ in the $\beta$ axis direction. The power failure detector 26 then calculates a root sum square of the system voltage values $V_{\alpha}1$ and $V_{\beta}1$ ($=\sqrt{(V_{\alpha}1^2 + V_{\beta}1^2)}$), and uses the calculation result as the secondary side voltage value Va1.

As the second drive controller 21A, the second drive controller 21 illustrated in FIG. 3, or the second drive controller 21a illustrated in FIG. 12 may be used. When the second drive controller 21 illustrated in FIG. 3 is used as the second drive controller 21A, the AC generator pulse pattern generator 77 illustrated in FIG. 7 or the AC generator pulse pattern generator 77b illustrated in FIG. 16 is provided to the pulse pattern generator 43.

When the second drive controller 21a illustrated in FIG. 12 is used as the second drive controller 21A, the AC generator pulse pattern generator 77a illustrated in FIG. 13 is provided to the pulse pattern generator 43. When the AC generator pulse pattern generator 77a illustrated in FIG. 13 or the AC generator pulse pattern generator 77b illustrated in FIG. 16 is provided to the pulse pattern generator 43, the current detector 16 illustrated in FIG. 19 may be omitted.

When the second drive controller 21 illustrated in FIG. 3, or the second drive controller 21a illustrated in FIG. 12 is used, the configurations of the system pulse pattern generator 76, the GeGr switch drive signal generator 78, and the GrGe switch drive signal generator 79 need to be modified.

The following describes the configurations of the system pulse pattern generator 76a, the GeGr switch drive signal generator 78a, and the GrGe switch drive signal generator 79a provided to the second drive controller 21A when the second drive controller 21 illustrated in FIG. 3 is used, with reference to FIG. 21.

When the second drive controller 21a illustrated in FIG. 12 is used, the AC generator pulse pattern generator 77a illustrated in FIG. 13 is provided instead of the AC generator pulse pattern generator 77 illustrated in FIG. 21. In such a case, the second drive controller 21a is also provided with the system pulse pattern generator 76a, the GeGr switch drive signal generator 78a, and the GrGe switch drive signal generator 79a illustrated in FIG. 21.

As illustrated in FIG. 21, the system pulse pattern generator 76a includes adders 761 to 763 and pattern generators 764 to 766. Each of the adders 761 to 763 adds a phase corresponding to a voltage phase difference between the primary winding 17 and the corresponding secondary winding 18 in the multiplex transformer 10A (for example, see Table 1) to the system correction phase $\theta$rst', and outputs the result of the addition to the respective pattern generators 764 to 766. Specifically, the adder 761 adds a 0 degrees phase to the system correction phase $\theta$rst'. The adder 762 adds a 20 degrees phase to the system correction phase $\theta$rst'. The adder 763 adds a 40 degrees phase to the system correction phase $\theta$rst'.

As mentioned earlier, the voltage phase differences between the primary winding 17 and the secondary windings 18 are not limited to the example indicated in Table 1. For example, the phase difference between the primary winding 17 and the secondary windings 18a to 18c may be 10 degrees. The phase difference between the primary winding 17 and the secondary windings 18d to 18f may be 30 degrees, and the phase difference between the primary winding 17 and the secondary windings 18g and 18h may be 50 degrees. In such a case, the adder 761 adds a 10 degrees phase to the system correction phase $\theta$rst', the adder 762 adds a 30 degrees phase to the system correction phase $\theta$rst', and the adder 763 adds a 50 degrees phase to the system correction phase $\theta$rst'.

Based on the results of addition performed by the adders 761 to 763, the pattern generators 764 to 766 generate patterns of the switch drive signals Srp to Stn for the converter 81 to allow supply of the 120-degree conduction control current to the voltage phases $\theta$rst1 to $\theta$rst3 in each of the secondary windings 18. All of the pattern generators 764 to 766 have the same configuration.

Specifically, the pattern generator 764 generates the switch drive signals Srp1, Ssp1, Stp1, Srn1, Ssn1, and Stn1 (hereinafter, referred to as "switch drive signals Srp1 to Stn1") based on the result of addition performed by the adder 761.

The pattern generator 765 generates switch drive signal Srp2, Ssp2, Stp2, Srn2, Ssn2, and Stn2 (hereinafter, referred to as "switch drive signals Srp2 to Stn2") based on the result of addition performed by the adder 762. The pattern generator 766 generates switch drive signals Srp3, Ssp3, Stp3, Srn3, Ssn3, and Stn3 (hereinafter, referred to as "switch drive signals Srp3 to Stn3") based on the result of addition performed by the adder 763.

The switch drive signals Srp1 to Stn1 are pulse patterns for allowing supply of a current whose phase is advanced by 90 degrees with respect to the voltage phase θrst1 to the secondary windings 18a to 18c. The relation between the voltage phase θrst1 at the r1 phase, the s1 phase, and the t1 phase of each of the secondary windings 18a to 18c and the switch drive signals Srp1 to Stn1 is a relation in which Vr, Vs, and Vt illustrated in FIG. 6 are replaced with Vr1, Vs1, and Vt1, respectively, and Srp to Stn illustrated in FIG. 6 are replaced with Srp1 to Stn1, respectively.

The switch drive signals Srp2 to Stn2 are signals whose phases are advanced by 20 degrees with respect to the switch drive signals Srp1 to Stn1, and are pulse patterns for allowing supply of a current whose phase is advanced by 90 degrees with respect to the voltage phase θrst2 to the secondary windings 18d to 18f.

The switch drive signals Srp3 to Stn3 are signals whose phases are advanced by 40 degrees with respect to the switch drive signals Srp1 to Stn1, respectively, and are pulse patterns for allowing supply of a current whose phase is advanced by 90 degrees with respect to the voltage phase θrst3 to the secondary windings 18g to 18i, respectively.

In this manner, a reactive current whose phase is advanced by 90 degrees and having zero active current can be supplied to each of the secondary windings 18a to 18i, thereby allowing supply of a reactive current having zero system active current IP to the power system 2.

The GeGr switch drive signal generator 78a includes signal generators 781 to 783. The signal generators 781 to 783 generate switch drive signals S1r, S1s, S1t, S2r, S2s, and S2t, using Formula (4) below, based on the switch drive signals Srni, Ssni, and Stni ($1 \leq i \leq 3$) output from the pattern generators 764 to 766 and the switch drive signals Sup to Swn output from the AC generator pulse pattern generator 77. The switch drive signals S1r, S1s, S1t, S2r, S2s, and S2t are signals for driving the unidirectional switching elements enabling a current to flow in a direction from the rotary electric machine 3 toward the secondary winding 18, among those constituting the bidirectional switches Sw1 to Sw6 illustrated in FIG. 20. In Formula (4), "*" represents "u", "v" or "w".

[Expression 4]

$$\begin{bmatrix} S1r & Sr1 & S2r & Sr2 \\ S1s & Ss1 & S2s & Ss2 \\ S1t & St1 & S2t & St2 \end{bmatrix} = \begin{bmatrix} Srni & Srpi & Srni & Srpi \\ Ssni & Sspi & Ssni & Sspi \\ Stni & Stpi & Stni & Stpi \end{bmatrix} \begin{bmatrix} S*p & 0 & 0 & 0 \\ 0 & S*n & 0 & 0 \\ 0 & 0 & S*n & 0 \\ 0 & 0 & 0 & S*p \end{bmatrix} \quad \cdots (4)$$

Specifically, the signal generator 781 generates U phase switch drive signal S1r, S1s, S1t, S2r, S2s, and S2t (hereinafter, referred to as SAul), using Formula (5) below, based on the switch drive signal Srn1, Ssn1, and Stn1 output from the pattern generator 764 and the switch drive signals Sup and Sun.

[Expression 5]

$$\begin{bmatrix} S1r & S2r \\ S1s & S2s \\ S1t & S2t \end{bmatrix} = \begin{bmatrix} Srn1 & Srn1 \\ Ssn1 & Ssn1 \\ Stn1 & Stn1 \end{bmatrix} \begin{bmatrix} Sup & 0 \\ 0 & Sun \end{bmatrix} \quad \cdots (5)$$

The signal generator 781 also generates V phase switch drive signals S1r, S1s, S1t, S2r, S2s, and S2t (hereinafter, referred to as SAvl), using Formula (6) below, based on the switch drive signals Srn1, Ssn1, and Stn1 output from the pattern generator 764 and the switch drive signals Svp and Svn.

[Expression 6]

$$\begin{bmatrix} S1r & S2r \\ S1s & S2s \\ S1t & S2t \end{bmatrix} = \begin{bmatrix} Srn1 & Srn1 \\ Ssn1 & Ssn1 \\ Stn1 & Stn1 \end{bmatrix} \begin{bmatrix} Svp & 0 \\ 0 & Svn \end{bmatrix} \quad \cdots (6)$$

The signal generator 781 also generates W phase switch drive signals S1r, S1s, S1t, S2r, S2s, and S2t (hereinafter, referred to as SAw1), using Formula (7) below, based on the switch drive signals Srn1, Ssn1, and Stn1 output from the pattern generator 764 and the switch drive signals Swp and Swn.

[Expression 7]

$$
\begin{bmatrix} S1r & S2r \\ S1s & S2s \\ S1t & S2t \end{bmatrix} = \begin{bmatrix} Srn1 & Srn1 \\ Ssn1 & Ssn1 \\ Stn1 & Stn1 \end{bmatrix} \begin{bmatrix} Swp & 0 \\ 0 & Swn \end{bmatrix} \quad \cdots (7)
$$

The signal generator 782 has the same configuration as the signal generator 781. In the same manner as the signal generator 781, the signal generator 782 generates switch drive signals S1r, S1s, S1t, S2r, S2s, and S2t for each of the U phase, the V phase, and the W phase (hereinafter, referred to as SAu2, SAv2, and SAw2, respectively), using Formulas (5) to (7) above, based on the switch drive signals Srn2, Ssn2, and Stn2 output from the pattern generator 765 and the switch drive signals Sup to Swn. The values of the switch drive signals Srn2, Ssn2, and Stn2 are set to "Srn1", "Ssn1", and "Stn1", respectively, in Formulas (5) to (7) above.

The signal generator 783 has the same configuration as the signal generator 781. In the same manner as the signal generator 781, the signal generator 783 generates switch drive signal S1r, S1s, S1t, S2r, S2s, and S2t for each of the U phase, the V phase, and the W phase (hereinafter, referred to as SAu3, SAv3, and SAw3, respectively), using Formulas (5) to (7) above, based on the switch drive signals Srn3, Ssn3, and Stn3 output from the pattern generator 766 and the switch drive signals Sup to Swn. The values of the switch drive signals Srn3, Ssn3, and Stn3 are set to "Srn1", "Ssn1", and "Stn1", respectively, in Formulas (5) to (7) above.

The GrGe switch drive signal generator 79a includes signal generators 791 to 793. The signal generators 791 to 793 generate switch drive signal Sr1, Ss1, St1, Sr2, Ss2, and St2, using Formula (4) above, based on the switch drive signals Srpi, Sspi, and Stpi (1≤i≤3) output from the pattern generators 764 to 766 and the switch drive signals Sup to Swn output from the AC generator pulse pattern generator 77. The switch drive signal Sr1, Ss1, St1, Sr2, Ss2, and St2 are signals for driving the unidirectional switching elements enabling a current to flow in a direction from the secondary winding 18 toward the rotary electric machine 3, among those constituting the bidirectional switches Sw1 to Sw6 illustrated in FIG. 20.

Specifically, the signal generator 791 generates U phase switch drive signals Sr1, Ss1, St1, Sr2, Ss2, and St2 (hereinafter, referred to as SBu1), using Formula (8) below, based on the switch drive signals Srp1, Ssp1, and Stp1 output from the pattern generator 764 and the switch drive signals Sup and Sun.

[Expression 8]

$$
\begin{bmatrix} Sr1 & Sr2 \\ Ss1 & Ss2 \\ St1 & St2 \end{bmatrix} = \begin{bmatrix} Srp1 & Srp1 \\ Ssp1 & Ssp1 \\ Stp1 & Stp1 \end{bmatrix} \begin{bmatrix} Sun & 0 \\ 0 & Sup \end{bmatrix} \quad \cdots (8)
$$

The signal generator 791 also generates V phase switch drive signals Sr1, Ss1, St1, Sr2, Ss2, and St2 (hereinafter, referred to as SBv1), using Formula (9) below, based on the switch drive signals Srp1, Ssp1, and Stp1 output from the pattern generator 764 and the switch drive signals Svp and Svn.

[Expression 9]

$$
\begin{bmatrix} Sr1 & Sr2 \\ Ss1 & Ss2 \\ St1 & St2 \end{bmatrix} = \begin{bmatrix} Srp1 & Srp1 \\ Ssp1 & Ssp1 \\ Stp1 & Stp1 \end{bmatrix} \begin{bmatrix} Svn & 0 \\ 0 & Svp \end{bmatrix} \quad \cdots (9)
$$

The signal generator 791 also generates W phase switch drive signals Sr1, Ss1, St1, Sr2, Ss2, and St2 (hereinafter, referred to as SBw1), using Formula (10) below, based on the switch drive signals Srp1, Ss1p, and Stp1 output from the pattern generator 764 and the switch drive signals Swp and Swn.

[Expression 10]

$$\begin{bmatrix} Sr1 & Sr2 \\ Ss1 & Ss2 \\ St1 & St2 \end{bmatrix} = \begin{bmatrix} Srp1 & Srp1 \\ Ssp1 & Ssp1 \\ Stp1 & Stp1 \end{bmatrix} \begin{bmatrix} Swn & 0 \\ 0 & Swp \end{bmatrix} \qquad \cdots (10)$$

The signal generator 792 has the same configuration as the signal generator 791. In the same manner as the signal generator 791, the signal generator 792 generates the switch drive signals Sr1, Ss1, St1, Sr2, Ss2, and St2 for each of the U phase, the V phase, and the W phase, respectively (hereinafter, referred to as SBu2, SBv2, SBw2, respectively), using Formulas (8) to (10) above, based on the switch drive signals Srp2, Ssp2, and Stp2 output from the pattern generator 765 and the switch drive signals Sup to Swn. The values of the switch drive signals Srp2, Ssp2, and Stp2 are set to "Srp1", "Ssp1", and "Stp1", respectively, in the Formulas (8) to (10) above.

The signal generator 793 has the same configuration as the signal generator 791. In the same manner as the signal generator 791, the signal generator 793 generates the switch drive signals Sr1, Ss1, St1, Sr2, Ss2, and St2 for each the U phase, the V phase, and the W phase, respectively (hereinafter, referred to as SBu3, SBv3, and SBw3, respectively), using Formulas (8) to (10) above, based on the switch drive signals Srp3, Ssp3, and Stp3 output from the pattern generator 766 and the switch drive signals Sup to Swn. The values of the switch drive signals Srp3, Ssp3, and Stp3 are set to "Srp1", "Ssp1", and "Stp1", respectively, in the Formulas (8) to (10) above.

The pulse pattern generator 43 then outputs the switch drive signals SAu1 to SAu3, SAv1 to SAv3, SAw1 to SAw3, SBu1 to SBu3, SBv1 to SBv3, and SBw1 to SBw3 thus generated for the U phase, the V phase, and the W phase to the power conversion unit 10B.

Specifically, as illustrated in FIG. 19, the U phase switch drive signals SAu1 to SAu3 and SBu1 to SBu3 are output to the respective power conversion cells 19a, 19d, and 19g constituting the U phase power conversion cell unit. The V phase switch drive signals SAv1 to SAv3 and SBv1 to SBv3 are output to the respective power conversion cells 19b, 19e, and 19h constituting the V phase power conversion cell unit. The W phase switch drive signals SAw1 to SAw3 and SBw1 to SBw3 are output to the respective power conversion cells 19c, 19f, and 19i constituting the W phase power conversion cell unit.

In the manner described above, some unidirectional switching elements that pass a current between any two of the phases on the side of the secondary winding 18 and pass a current to flow between any two of the phases on the side of the rotary electric machine 3 are kept ON, among those constituting the bidirectional switches Sw1 to Sw6 in the power conversion unit 10B.

In the serial multiplex matrix converter 100, the GeGr switch drive signal generator 78a and the GrGe switch drive signal generator 79a generate the switch drive signals based on the switch drive signals Sup to Swn for preventing the switching control for shutting down a current from being performed while a current is flowing into the U phase, the V phase, and the W phase, and outputs the switch drive signals to the power conversion unit 10B.

In this manner, the serial multiplex matrix converter 100 can suppress generation of a surge voltage caused by switching control for shutting down a current performed while a current is flowing into the U phase, the V phase, and the W phase.

In the embodiment described above, each of the U phase, the V phase, and the W phase power conversion cell units has a configuration in which the power conversion cells 19 are connected serially in three stages, but may instead have a configuration in which the power conversion cells 19 are connected serially in two stages or four or more stages.

Furthermore, in the embodiment described above, a part of the functions of the controller 15A may be provided to the power conversion cells 19. For example, the whole or a part of the functions of the second drive controller 21A and the switching unit 22 may be provided to each of the power conversion cells 19.

Furthermore, in the embodiment described above, the system pulse pattern generator 76a may also generate switch drive signals Srp1 to Srp3 to Stn1 to Stn3 allowing supply of a 120-degree conduction control current delayed by 90 degrees with respect to the voltage phase θrst1 to θrst3 of the each of the secondary windings 18. In this manner, a reactive current delayed by 90 degrees and having zero system active current IP can be supplied to the power system 2. It is also possible to select which one of a reactive current delayed by 90 degrees or a reactive current advanced by 90 degrees is to be supplied to the power system 2, through a setting provided externally to the system pulse pattern generator 76a, for example.

The serial multiplex matrix converter 100 described above generates the switch drive signals Srp1 to Stn1 and the like based on the system correction phase θrst' generated by adding a system phase compensating value dθrst to the system phase θrst, but this is merely an example. In other words, the way in which the switch drive signals Srp1 to Stn1 are generated is not limited to the way described above, and various modifications are still possible.

For example, the serial multiplex matrix converter 100 may generate the switch drive signals Srp1 to Stn1 and the like based on compensating phases θrst1' to θrst3' generated by adding a system phase compensating value dθrst to the voltage phases θrst1 to θrst3 of the secondary winding 18, respectively.

In such a case, the matrix converter 100 is provided with a voltage detector that detects the voltages of the secondary windings 18a, 18d, and 18g and outputs the voltages to the second drive controller 21A in the controller 15A, and the second drive controller 21A is configured to perform the process explained below.

For example, the second drive controller 21A generates the respective voltage phases θrst1 to θrst3 based on the voltages of the secondary windings 18a, 18d, 18g. Subsequently, the second drive controller 21A generates the compensated phases θrst1' to θrst3' generated by adding the system phase compensation value dθrst to the respective voltage phases θrst1 to θrst3.

The second drive controller 21A then inputs the compensating phase θrst1' to the pattern generator 764 illustrated in FIG. 21, inputs the compensating phase θrst2' to the pattern generator 765, and inputs the compensating phase θrst3' to the pattern generator 766. The second drive controller 21A performing such an operation is also capable of generating patterns of the switch drive signals Srp1 to Stn1, Srp2 to Stn2, and Srp3 to Stn3 to allow supply of a 120-degree conduction control current to the voltage phases θrst1 to θrst3 of each of the secondary windings 18. In this manner, control can be performed without providing settings based on the characteristics of the multiplex transformer 10A, for example.

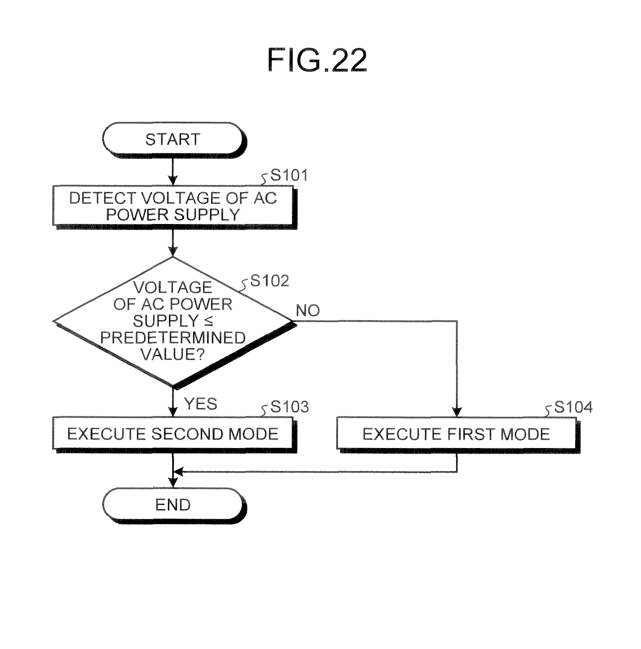

Next, a process that is executed by the controller 15 or 15A according to the embodiments will be explained with reference to FIG. 22. FIG. 22 is a flowchart illustrating a process that is executed by the controller 15 or 15A according to the embodiments.

As illustrated in FIG. 22, the controller 15 or 15A detects the system voltage value Va that is a voltage of the AC power supply (Step S101). Then, the controller 15 or 15A determines whether the detected system voltage value Va is not more than the voltage value V1 that is a predetermined value (Step S102).

When it is determined that the system voltage value Va is not more than the voltage value V1 that is the predetermined value (Step S102: YES), the controller 15 or 15A executes the second control mode. Specifically, the controller 15 or 15A performs one operation and switches two operations to perform the power conversion control. Herein, the one operation is always to turn ON the unidirectional switching elements 31, 32 enabling a current to flow between two of the phases of the AC power supply, one of the two operations is always to turn ON the unidirectional switching elements 31, 32 enabling a current to flow between one-pair phases of the phases of the rotary electric machine, and the other of the two operations is to turn ON the unidirectional switching elements 31, 32 enabling a current to flow between two-pair phases of the phases of the rotary electric machine, among the unidirectional switching elements 31, 32 constituting the bidirectional switches SW1 to SW9 (or SW1 to SW6).

After that, the controller 15 or 15A terminates the process, and again starts the process from Step S101. On the other hand, when it is determined that the system voltage value Va is larger than the voltage value V1 that is the predetermined value (Step S102: NO), the controller 15 or 15A executes the first control mode (Step S104).

Specifically, the controller 15 or 15A turns ON all of the plurality of unidirectional switching elements 31, 32 constituting the bidirectional switches SW1 to SW9 (or SW1 to SW6), which connect each phase of the alternating current power supply with each phase of the rotary electric machine, to perform the power conversion control. Then, the controller 15 or 15A terminates the process, and again starts the process from Step S101.

## Claims

**1.** A matrix converter (1; 100) comprising:

a plurality of bidirectional switches (Sw1 to Sw9) that connect each phase of an alternating current (AC) power supply (2) with each phase of a rotary electric machine (3); and
a controller (15; 15A) that controls the bidirectional switches (Sw1 to Sw9) to perform power conversion control between the AC power supply (2) and the rotary electric machine (3), wherein
the controller (15; 15A) performs:

a first drive control by which all of a plurality of unidirectional switching elements (31, 32) constituting the bidirectional switches (Sw1 to Sw9) are turned ON to perform the power conversion control; and
a second drive control by which one operation is performed and two operations are switched to perform the power conversion control, the one operation always turning ON the unidirectional switching elements (31, 32) enabling a current to flow between two of the phases of the AC power supply (2), one of the two operations always turning ON the unidirectional switching elements (31, 32) enabling a current to flow between one-pair phases of the phases of the rotary electric machine (3), and the other of the two operations turning ON the unidirectional switching elements (31, 32) enabling a current to flow between two-pair phases of the phases of the rotary electric machine (3), among the unidirectional switching elements (31, 32)

constituting the bidirectional switches (Sw1 to Sw9).

2. The matrix converter (1) according to claim 1, wherein the second drive control includes switching ON one or two of the unidirectional switching elements (31, 32) enabling a current to flow in a direction from the AC power supply (2) to the rotary electric machine (3), and switching ON one or two of the unidirectional switching elements (31, 32) enabling a current to flow in a direction from the rotary electric machine (3) to the AC power supply (2), among the unidirectional switching element (31, 32) constituting the bidirectional switches (Sw1 to Sw9) to switch ON a total of two or three of the unidirectional switching element (31, 32).

3. The matrix converter (1) according to claim 2, wherein the second drive control includes generating, using a current inverter model (80) including a converter (81) and an inverter (82), switch drive signals for controlling the unidirectional switching elements by synthesizing a switch drive signal for the converter (81) and a switch drive signal for the inverter (82).

4. The matrix converter (1) according to claim 3, wherein the switch drive signal for the converter (81) enables a 120-degree conduction control, and the switch drive signal for the inverter (82) causes a rise in the conduction to be advanced from that in the 120-degree conduction control and causes a drop in the conduction to be delayed from that in the 120-degree conduction control.

5. The matrix converter (1) according to claim 4, further comprising:

a current detector (16) that detects current values in the phases of the rotary electric machine, wherein the controller (15) delays the drop in the conduction after the rise in the conduction until absolute values of the currents detected by the current detector (16) become equal to or lower than a predetermined threshold.

6. The matrix converter (1) according to claim 4, wherein the controller (15) delays the drop in the conduction from that in the 120-degree conduction control by a same period as that by which the rise in the conduction is advanced from that in the 120-degree conduction control.

7. The matrix converter (1) according to claim 4, further comprising:

a table for associating a period by which the rise in the conduction is advanced from that in the 120-degree conduction control and a period by which the drop in the conduction is delayed from that in the 120-degree conduction control, wherein the controller (15) controls the unidirectional switching elements (31, 32) based on the table.

8. The matrix converter (1) according to any one of claims 1 to 7, wherein the controller (15) performs control by switching between a first control mode in which the power conversion control is performed by collectively controlling the unidirectional switching elements (31, 32) constituting each of the bidirectional switches (Sw1 to Sw9), and a second control mode in which the power conversion control is performed by individually controlling the unidirectional switching elements (31, 32) constituting each of the bidirectional switches (Sw1 to Sw9).

9. The matrix converter (1) according to claim 8, further comprising:

a voltage detector (13) that detects a voltage of the AC power supply (2), wherein the controller (15) performs the power conversion control in the first control mode when the voltage of the AC power supply (2) exceeds a predetermined level, and performs the power conversion control in the second control mode when the voltage of the AC power supply (2) is equal to or lower than the predetermined level.

10. The matrix converter (100) according to any one of claims 1 to 9, wherein a power conversion unit (10B) includes a power conversion cell unit that is provided for each of the phases of the rotary electric machine (3) and in which a plurality of power conversion cells (19a to 19i) each having a plurality of bidirectional switches (Sw1 to Sw9) are connected serially in a plurality of stages.

11. A method for controlling a matrix converter (1), the method comprising:

detecting a voltage of an alternating current (AC) power supply (2);
determining whether the voltage of the AC power supply (3) is not more than a predetermined level;

turning ON, when the voltage of the AC power supply (2 )exceeds the predetermined level, all of a plurality of unidirectional switching elements (31, 32) constituting a plurality of bidirectional switches (Sw1 to Sw9) that connect each phase of the AC power supply (2) with each phase of a rotary electric machine (3), to performing power conversion control; and

performing, when the voltage of the AC power supply (2) is not more than the predetermined level, one operation and switching two operations to perform the power conversion control, the one operation always turning ON the unidirectional switching elements (31, 32) enabling a current to flow between two of the phases of the AC power supply (2), one of the two operations always turning ON the unidirectional switching elements (31, 32) enabling a current to flow between one-pair phases of the phases of the rotary electric machine (3), and the other of the two operations turning ON the unidirectional switching elements (31, 32) enabling a current to flow between two-pair phases of the phases of the rotary electric machine (3), among the unidirectional switching elements (31, 32) constituting the bidirectional switches (Sw1 to Sw9).

# FIG.1

# FIG.2

# FIG.3

EP 2 747 264 A2

# FIG.4

# FIG.5

# FIG.6

# FIG.7

# FIG.8

# FIG.9

# FIG.10

# FIG.11

FIG.12

# FIG.13

77a

**AC GENERATOR PULSE PATTERN GENERATOR**

94a

**U-PHASE PULSE PATTERN GENERATOR**

$\theta$ uvwA

94Ap    95p

PULSE PATTERN GENERATOR — SupA

$\theta$ uvwB

PULSE PATTERN GENERATOR — SupB

94Bp

Sup

94An    95n

PULSE PATTERN GENERATOR — SunA

PULSE PATTERN GENERATOR — SunB

94Bn

Sun

PHASE SHIFTER

120°   ~773

SUB-TRACTOR

94b

V-PHASE PULSE PATTERN GENERATOR

Svp

Svn

SUB-TRACTOR

120°   ~774

PHASE SHIFTER

PHASE SHIFTER

240°   ~775

SUB-TRACTOR

94c

W-PHASE PULSE PATTERN GENERATOR

Swp

Swn

SUB-TRACTOR

240°   ~776

PHASE SHIFTER

# FIG.14

# FIG.15

# FIG.16

77b

AC GENERATOR PULSE PATTERN GENERATOR

96a

U-PHASE PULSE PATTERN GENERATOR

θ uvw'

PULSE PATTERN TABLE

97

Sup

Sun

777

PHASE SHIFTER

120°

SUB-TRACTOR

96b

V-PHASE PULSE PATTERN GENERATOR

Svp

Svn

778

PHASE SHIFTER

240°

SUB-TRACTOR

96c

W-PHASE PULSE PATTERN GENERATOR

Swp

Swn

# FIG.17

d θ 2uvw

d θ uvw

# FIG.18

FIG.19

# FIG.20

# FIG.21

# FIG.22

```
                    START

                       │
                       ▼           ⌐S101
          ┌──────────────────────────┐
          │  DETECT VOLTAGE OF AC     │
          │      POWER SUPPLY         │
          └──────────────────────────┘
                       │
                       ▼
                  ╱         ╲       ⌐S102
               ╱   VOLTAGE    ╲
            ╱    OF AC POWER    ╲       NO
          ╱        SUPPLY ≤       ╲──────────────────┐
          ╲     PREDETERMINED    ╱                    │
            ╲      VALUE?      ╱                       │
               ╲           ╱                          │
                  ╲     ╱                             │
                   YES        ⌐S103                   │          ⌐S104
          ┌──────────────────────┐        ┌──────────────────────────┐
          │  EXECUTE SECOND MODE  │        │    EXECUTE FIRST MODE     │
          └──────────────────────┘        └──────────────────────────┘
                       │                              │
                       ▼◄─────────────────────────────┘
                     END
```

**EP 2 747 264 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005287200 A